# EUROPEAN PATENT APPLICATION

(11) **EP 4 546 865 A1**
(43) Date of publication of application: **30.04.2025**
(21) Application number: 23838698.1
(22) Date of filing: 28.06.2023
(51) Int. Cl.: H04W 28/16, H04W 28/10, H04L 43/0852

(54) **COMMUNICATION METHOD, DEVICE AND SYSTEM**

(30) Priority: 15.07.2022 CN 202210835857
(71) Applicant: Huawei Technologies Co., Ltd., Shenzhen, Guangdong 518129 (CN)
(72) Inventor: PAN, Qi, Shenzhen, Guangdong 518129 (CN)
(74) Representative: Gill Jennings & Every LLP
(86) International application number: PCT/CN2023/103457
(87) International publication number: WO 2024/012205

(57) **Abstract**

This application relates to the field of communication technologies, and discloses a communication method, apparatus, and system, so that a delay guarantee mechanism at a data packet granularity can be reused to implement delay guarantee at a data packet set granularity, thereby guaranteeing service experience of a user. The method includes: A user plane function network element receives a data packet; the user plane function network element obtains a receiving time point of a data packet set to which the data packet belongs; and the user plane function network element determines delay budget information of the data packet based on a receiving time point of the data packet and the receiving time point of the belonging data packet set, and adds the delay budget information of the data packet to the data packet.

## Description

### CROSS-REFERENCE TO RELATED APPLICATIONS

This application claims priority to Chinese Patent Application No. 202210835857.X, filed with the China National Intellectual Property Administration on July 15, 2022 and entitled "COMMUNICATION METHOD, APPARATUS, AND SYSTEM", which is incorporated herein by reference in its entirety.

### TECHNICAL FIELD

Embodiments of this application relate to the field of communication technologies, and in particular, to a communication method, apparatus, and system.

### BACKGROUND

With rapid development of the new media industry, an explosive amount of data in the new media industry poses a challenge to a network transmission capability, especially for highly interactive real-time extended reality (extended reality, XR) services, which have an extremely strict requirement on an end-to-end delay. A data processing granularity corresponding to an upper-layer media service in encoding and transmission processes is no longer a data packet granularity. For example, when encoding is performed at a media layer, a transmitter performs processing at a granularity of a media frame, a media segment, or the like. That is, media frames or media segments may be independently encoded. In addition, a receiver performs decoding and display processing also at a same granularity of the media frame, the media segment, or the like. A basic data unit such as a media frame or a media segment usually includes a plurality of data packets. To transmit a plurality of data packets corresponding to one or more media frames or one or more media segments at a network transport layer, a protocol data unit set (protocol data unit set, PDU set) is introduced in the standard. The PDU set may also be referred to as a data packet set, and the PDU set includes data packets of one or more media frames or one or more media segments. Once some data packets in a PDU set are lost or damaged, it may be difficult to correctly decode and display the entire PDU set.

In a current quality of service (quality of service, QoS) mechanism, service guarantee is still performed at a data packet granularity, and a service guarantee requirement at a PDU set granularity cannot be met. Therefore, how to provide service guarantee for transmission at a PDU set granularity becomes an urgent problem to be resolved.

### SUMMARY

Embodiments of this application provide a communication method, apparatus, and system, so that a delay guarantee mechanism at a data packet granularity is reused, to implement delay guarantee at a data packet set (that is, PDU set) granularity, and provide service guarantee for transmission at the data packet set granularity, thereby guaranteeing service experience of a user.

According to a first aspect, an embodiment of this application provides a communication method. The method may be performed by a user plane network element or a module (for example, a chip) in the user plane network element. For example, the user plane network element performs the method. The method includes: The user plane function network element receives a data packet; the user plane function network element obtains a receiving time point of a data packet set to which the data packet belongs; and the user plane function network element determines delay budget information of the data packet based on a receiving time point of the data packet and the receiving time point of the belonging data packet set; and the user plane function network element adds the delay budget information of the data packet to the data packet. Optionally, the receiving time point of the data packet set is a time point at which the user plane network element or the module (for example, the chip) used in the user plane network element receives a 1^{st} data packet in the data packet set.

For a data packet set sent by an application server or the like to the user plane function network element, due to impact of factors such as a bandwidth limitation and a transmission route on an application server side, a plurality of data packets in the data packet set may arrive at the user plane function network element at different time points. For example, duration by which a 2^{nd} data packet in the data packet set arrives at the user plane function network element later than the 1^{st} data packet (that is, duration by which the 2^{nd} data packet is late received by the user plane function network element) is t1, duration by which a 3^{rd} data packet arrives at the user plane function network element later than the 2^{nd} data packet is t2, and duration by which a 4^{th} data packet arrives at the user plane function network element later than the 3^{rd} data packet is t3. If a delay guarantee mechanism at a data packet granularity is still directly used, for example, after data packets in a data packet set are transmitted by using a QoS flow corresponding to a same data packet delay budget (packet delay budget, PDB), an access network device that receives a data packet schedules and transmits a subsequent data packet based on a PDB corresponding to the QoS flow. In this case, a 2^{nd} data packet in the data packet set is received by a terminal device after a delay of duration t1 relative to a 1^{st} data packet, a 3^{rd} data packet is received by the terminal device after a delay of duration t1+t2 relative to the 1^{st} data packet, and a 4^{th} data packet is received by the terminal device after a delay of duration t1+t2+t3 relative to the 1^{st} data packet. It is possible that only some data packets in the data packet set meet a delay requirement. For example, only the 1^{st} data packet meets the delay requirement, and other data packets do not meet the delay requirement. Therefore, delay guarantee for the data packet set cannot be met. In this embodiment of this application, according to the foregoing method, the delay budget information of the data packet can be determined based on the receiving time point of the data packet and the receiving time point of the data packet set to which the data packet belongs, to eliminate impact caused by different data packets that are in the data packet set and that arrive at the user plane function network element at inconsistent time points, to provide delay guarantee for transmission at a data packet set (namely, PDU set) granularity, thereby guaranteeing service experience of a user.

In a possible design, the delay budget information of the data packet is a delay offset of the data packet, and the delay offset of the data packet indicates a difference between the receiving time point of the data packet and the receiving time point of the data packet set to which the data packet belongs.

In the foregoing design, the delay offset of the data packet is added to the data packet, so that the access network device that receives the data packet can determine an available transmission delay budget of the data packet based on the delay offset of the data packet and a delay budget of the data packet set, to perform data packet transmission scheduling processing, thereby guaranteeing a delay requirement of the data packet set.

In a possible design, the delay budget information of the data packet is an available transmission delay budget of the data packet. That the user plane function network element determines delay budget information of the data packet based on a receiving time point of the data packet and the receiving time point of the data packet set to which the data packet belongs includes: The user plane function network element determines the available transmission delay budget of the data packet based on the receiving time point of the data packet, the receiving time point of the data packet set to which the data packet belongs, and a delay budget of the data packet set.

In the foregoing design, the user plane function network element may calculate the available transmission delay budget of the data packet based on a parameter such as the delay budget of the data packet set, and add the available transmission delay budget of the data packet to the data packet, to notify the access network device that receives the data packet, so that the access network device that receives the data packet can perform data packet transmission scheduling processing based on the available transmission delay budget of the data packet, thereby guaranteeing a delay requirement of the data packet set.

In a possible design, a data connection session (for example, a protocol data unit (protocol data unit, PDU) session) for transmitting the data packet corresponds to a plurality of QoS flows, each of the plurality of QoS flows corresponds to a different delay offset, the delay budget information of the data packet is identification information of a target QoS flow, and the target QoS flow is one of the plurality of QoS flows. That the user plane function network element determines delay budget information of the data packet based on a receiving time point of the data packet and the receiving time point of the data packet set to which the data packet belongs includes: The user plane function network element determines a delay offset of the data packet based on the receiving time point of the data packet and the receiving time point of the data packet set to which the data packet belongs; and the user plane function network element determines the identification information of the target QoS flow based on the delay offset of the data packet and the delay offset corresponding to each of the plurality of QoS flows.

Optionally, the method further includes: The user plane function network element receives a QoS parameter from a session management function network element, where the QoS parameter includes the delay offset corresponding to each of the plurality of QoS flows.

In the foregoing design, a plurality of QoS flows corresponding to different delay offsets may be created for the data connection session. The user plane function network element may map, based on delay offsets of data packets in the data packet set, data packets corresponding to the different delay offsets to the QoS flows corresponding to the different delay offsets, so that the access network device that receives the data packet can determine an available transmission delay budget of the data packet based on a delay offset corresponding to a QoS flow to which the data packet belongs and a delay budget of the data packet set, to perform data packet transmission scheduling processing, thereby guaranteeing a delay requirement of the data packet set.

In a possible design, a data connection session for transmitting the data packet corresponds to a plurality of QoS flows, each of the plurality of QoS flows corresponds to a different delay budget, the delay budget information of the data packet is identification information of a target QoS flow, and the target QoS flow is one of the plurality of QoS flows. That the user plane function network element determines delay budget information of the data packet based on a receiving time point of the data packet and the receiving time point of the data packet set to which the data packet belongs includes: The user plane function network element determines an available transmission delay budget of the data packet based on the receiving time point of the data packet, the receiving time point of the data packet set to which the data packet belongs, and a delay budget of the data packet set; and the user plane function network element determines the identification information of the target QoS flow based on the available transmission delay budget and the delay budget corresponding to each of the plurality of QoS flows.

Optionally, the method further includes: The user plane function network element receives a QoS parameter from a session management function network element, where the QoS parameter includes the delay budget corresponding to each of the plurality of QoS flows.

In the foregoing design, a plurality of QoS flows corresponding to delay budgets may be created for a PDU session. The user plane function network element may map, based on available transmission delay budgets of different data packets in the data packet set, the different data packets to QoS flows corresponding to the different delay budgets, so that the access network device that receives the data packet can perform data packet transmission scheduling processing based on a delay budget corresponding to a QoS flow to which the data packet belongs, thereby guaranteeing a delay requirement of the data packet set.

In a possible design, the method includes: The user plane function network element determines, based on the receiving time point of the data packet set to which the data packet belongs and a user plane function network element reference receiving time point of the belonging data packet set, a delay correction amount of the data packet set to which the data packet belongs; and the user plane function network element corrects the delay budget information of the data packet based on the delay correction amount.

Optionally, the user plane function network element reference receiving time point of the data packet set is a time point at which the 1^{st} data packet in the data packet set should be received by the user plane function network element or the module (for example, the chip) used in the user plane network element in an ideal case (for example, when there is no impact of, for example, network jitter).

In the foregoing design, the delay correction amount of the data packet set is determined, and the delay budget information of the data packet is corrected, so that impact of a factor such as network jitter on transmission of the data packet set can be further eliminated, and reliability of delay guarantee for the data packet set can be further improved.

In a possible design, the method further includes: The user plane function network element receives data packet set information from the session management function network element, where the data packet set information includes a data packet set transmission interval and a user plane function network element reference receiving time point of an X^{th} data packet set in the data connection session for transmitting the data packet, where X is a positive integer; and the user plane function network element determines, based on the user plane function network element reference receiving time point of the X^{th} data packet set and the data packet set transmission interval, the user plane function network element reference receiving time point of the data packet set to which the data packet belongs.

In the foregoing design, the user plane function network element may determine, based on a parameter such as the data packet set transmission interval from the session management function network element, user plane function network element reference receiving time points of different data packet sets. This helps accurately eliminate impact of a factor such as network jitter on transmission of the data packet set.

In a possible design, the method further includes: The user plane function network element determines, based on receiving time points of a plurality of consecutive data packet sets that have been received in the data connection session for transmitting the data packet, the user plane function network element reference receiving time point of the data packet set to which the data packet belongs.

In the foregoing design, the user plane function network element may further determine user plane function network element reference receiving time points of different data packet sets based on the collected receiving time points of the plurality of consecutive received data packet sets, to help reduce signaling overheads.

According to a second aspect, an embodiment of this application provides a communication method. The method may be performed by a policy control function network element or a module (for example, a chip) used in the policy control function network element. For example, the policy control function network element performs the method. The method includes: The policy control function network element receives a quality of service QoS requirement from an application function network element, where the QoS requirement includes a delay budget of a data packet set in a data connection session (for example, a PDU session); the policy control function network element establishes, based on the QoS requirement, a plurality of QoS flows for the data connection session, where each of the plurality of QoS flows corresponds to a different delay budget, or corresponds to a different delay offset; and the policy control function network element sends QoS information to a session management function network element, where the QoS information includes a delay budget or a delay offset corresponding to each of the plurality of QoS flows.

Optionally, the delay budget corresponding to each of the plurality of QoS flows is less than or equal to the delay budget of the data packet set, and the delay offset corresponding to each of the plurality of QoS flows is less than the delay budget of the data packet set.

According to the foregoing method, the policy control function network element may configure a plurality of different delay budgets or delay offsets for QoS flows of the data connection session, so that the session management function network element can establish, for the data connection session, a plurality of QoS flows corresponding to the different delay budgets or delay offsets. In this way, the user plane function network element may map, based on available transmission delay budgets or delay offsets of different data packets in the data packet set, the different data packets to QoS flows corresponding to the different delay budgets or the different delay offsets, so that an access network device that receives a data packet can perform data packet transmission scheduling processing based on a delay budget or a delay offset corresponding to a QoS flow to which a data packet belongs, thereby guaranteeing a delay requirement of the data packet set.

According to a third aspect, an embodiment of this application provides a communication method. The method may be performed by an access network device or a module (for example, a chip) used in the access network device. For example, the access network device performs the method. The method includes: The access network device receives a data packet from a user plane function network element, where the data packet carries delay budget information of the data packet, and the delay budget information of the data packet is determined based on a time point at which the user plane function network element receives the data packet and a time point at which the user plane function network element receives a data packet set to which the data packet belongs; and the access network device sends the data packet to a terminal device based on the delay budget information of the data packet.

According to the foregoing method, the user plane function network element may determine the delay budget information of the data packet based on the receiving time point of the data packet and the receiving time point of the data packet set to which the data packet belongs, so that the access network device that receives the data packet can eliminate, based on the delay budget information of the data packet, impact caused by different data packets in the data packet set that arrive at the user plane function network element at inconsistent time points, to provide delay guarantee for transmission at a data packet set granularity, thereby guaranteeing service experience of a user.

**In** a possible design, the delay budget information of the data packet is a delay offset of the data packet. That the access network device sends the data packet to a terminal device based on the delay budget information of the data packet includes: The access network device determines an available transmission delay budget of the data packet based on the delay offset and a delay budget of the data packet set; and the access network device sends the data packet to the terminal device based on the available transmission delay budget.

**In** a possible design, the delay budget information of the data packet is an available transmission delay budget of the data packet.

**In** a possible design, a data connection session for transmitting the data packet corresponds to a plurality of QoS flows, each of the plurality of QoS flows corresponds to a different delay offset, the delay budget information of the data packet is identification information of a target QoS flow, and the target QoS flow is one of the plurality of QoS flows. That the access network device sends the data packet to a terminal device based on the delay budget information of the data packet includes: The access network device determines an available transmission delay budget of the data packet based on a delay offset corresponding to the target QoS flow and a delay budget of the data packet set; and the access network device sends the data packet to the terminal device based on the available transmission delay budget.

In a possible design, a data connection session for transmitting the data packet corresponds to a plurality of QoS flows, each of the plurality of QoS flows corresponds to a different delay budget, the delay budget information of the data packet is identification information of a target QoS flow, and the target QoS flow is one of the plurality of QoS flows. That the access network device sends the data packet to a terminal device based on the delay budget information of the data packet includes: The access network device sends the data packet to the terminal device based on a delay budget corresponding to the target QoS flow.

According to a fourth aspect, an embodiment of this application provides a communication method. The method may be performed by an access network device or a module (for example, a chip) used in the access network device. For example, the access network device performs the method. The method includes: The access network device receives a data packet from a user plane function network element; the access network device obtains a receiving time point of a data packet set to which the data packet belongs; the access network device determines an available transmission delay budget of the data packet based on a receiving time point of the data packet, the receiving time point of the data packet set to which the data packet belongs, and a delay budget of the data packet set; and the access network device sends the data packet to a terminal device based on the available transmission delay budget.

According to the foregoing method, the access network device may determine the available transmission delay budget of the data packet in the data packet set based on the receiving time point of the data packet, the receiving time point of the data packet set to which the data packet belongs, and the delay budget of the data packet set, and perform data packet transmission scheduling processing, thereby guaranteeing a delay requirement at a data packet set granularity.

In a possible design, the method further includes: The access network device determines a delay correction amount of the belonging data packet set based on the receiving time point of the belonging data packet set and an access network device reference receiving time point of the belonging data packet set; and the access network device corrects the available transmission delay budget of the data packet based on the delay correction amount.

In a possible design, the method further includes: The access network device receives data packet set information from a session management function network element, where the data packet set information includes a data packet set transmission interval and an access network device reference receiving time point of an X^{th} data packet set in a data connection session (for example, a PDU session) for transmitting the data packet, where X is a positive integer; and the access network device determines, based on the access network device reference receiving time point of the X^{th} data packet set and the data packet set transmission interval, the access network device reference receiving time point of the data packet set to which the data packet belongs.

In a possible design, the method further includes: The access network device determines, based on receiving time points of a plurality of consecutive data packet sets that have been received in a data connection session for transmitting the data packet, the access network device reference receiving time point of the data packet set to which the data packet belongs.

According to a fifth aspect, an embodiment of this application provides a communication method. The method may be performed by a user plane network element or a module (for example, a chip) in the user plane network element. For example, the user plane network element performs the method. The method includes: The user plane function network element receives a data packet set; the user plane function network element determines delay budget information of the data packet set based on a receiving time point of the data packet set and a user plane function network element reference receiving time point of the data packet set; and the user plane function network element adds the delay budget information of the data packet set to at least one data packet in the data packet set.

According to the foregoing method, the user plane function network element may determine the delay budget information, for example, a delay correction amount, of the data packet set based on the receiving time point of the data packet set and the user plane function network element reference receiving time point of the data packet set, so that when an access network device that receives the data packet set sends the data packet set to a terminal device, impact caused by factors such as network jitter on transmission of the data packet set can be eliminated, thereby improving reliability of delay guarantee for the data packet set.

In a possible design, the delay budget information of the data packet set is a delay correction amount of the data packet set, and the delay correction amount indicates a difference between the receiving time point of the data packet set and the user plane function network element reference receiving time point of the data packet set.

In a possible design, the delay budget information of the data packet set is an available transmission delay budget of the data packet set. That the user plane function network element determines delay budget information of the data packet set based on a receiving time point of the data packet set and a user plane function network element reference receiving time point of the data packet set includes: The user plane function network element determines the available transmission delay budget of the data packet set based on the receiving time point of the data packet set, the user plane function network element reference receiving time point of the data packet set, and a delay budget of the data packet set.

In a possible design, a data connection session for transmitting the data packet set corresponds to a plurality of QoS flows, each of the plurality of QoS flows corresponds to a different delay correction amount, the delay budget information of the data packet set is identification information of a target QoS flow, and the target QoS flow is one of the plurality of QoS flows. That the user plane function network element determines delay budget information of the data packet set based on a receiving time point of the data packet set and a user plane function network element reference receiving time point of the data packet set includes: The user plane function network element determines a delay correction amount of the data packet set based on the receiving time point of the data packet set and the user plane function network element reference receiving time point of the data packet set; and the user plane function network element determines the identification information of the target QoS flow based on the delay correction amount of the data packet set and the delay correction amount corresponding to each of the plurality of QoS flows.

In a possible design, a data connection session for transmitting the data packet set corresponds to a plurality of QoS flows, each of the plurality of QoS flows corresponds to a different delay budget, the delay budget information of the data packet set is identification information of a target QoS flow, and the target QoS flow is one of the plurality of QoS flows. That the user plane function network element determines delay budget information of the data packet set based on a receiving time point of the data packet set and a user plane function network element reference receiving time point of the data packet set includes: The user plane function network element determines an available transmission delay budget of the data packet set based on the receiving time point of the data packet set, the user plane function network element reference receiving time point of the data packet set, and a delay budget of the data packet set; and the user plane function network element determines the identification information of the target QoS flow based on the available transmission delay budget and the delay budget corresponding to each of the plurality of QoS flows.

In a possible design, the method further includes: The user plane function network element receives a QoS parameter from a session management function network element, where the QoS parameter includes the delay correction amount corresponding to each of the plurality of QoS flows.

In a possible design, the method further includes: The user plane function network element receives a QoS parameter from a session management function network element, where the QoS parameter includes the delay budget corresponding to each of the plurality of QoS flows.

According to a sixth aspect, an embodiment of this application provides a communication method. The method may be performed by a policy control function network element or a module (for example, a chip) used in the policy control function network element. For example, the policy control function network element performs the method. The method includes: The policy control function network element receives a QoS requirement from an application function network element, where the QoS requirement includes a delay budget of a data packet set in a data connection session (for example, a PDU session); the policy control function network element establishes, based on the QoS requirement, a plurality of QoS flows for the data connection session, where each of the plurality of QoS flows corresponds to a different delay budget, or corresponds to a different delay correction amount; and the policy control function network element sends QoS information to a session management function network element, where the QoS information includes a delay budget or a delay correction amount corresponding to each of the plurality of QoS flows.

Optionally, the delay budget corresponding to each of the plurality of QoS flows is less than or equal to the delay budget of the data packet set, and the delay correction amount corresponding to each of the plurality of QoS flows is less than the delay budget of the data packet set.

According to the foregoing method, the policy control function network element may configure a plurality of different delay budgets or delay correction amounts for QoS flows of the data connection session, so that the session management function network element can establish, for the data connection session, a plurality of QoS flows corresponding to the different delay budgets or delay correction amounts. In this way, a user plane function network element may map, based on an available transmission delay budget or a delay correction amount corresponding to the data packet set, the data packet set to QoS flows corresponding to the different delay budgets or the different delay correction amounts, so that an access network device that receives a data packet can perform data packet set transmission scheduling processing based on a delay budget or a delay correction amount corresponding to a QoS flow to which the data packet set belongs, thereby guaranteeing a delay requirement of the data packet set.

According to a seventh aspect, an embodiment of this application provides a communication method. The method may be performed by an access network device or a module (for example, a chip) used in the access network device. For example, the access network device performs the method. The method includes: The access network device receives a data packet from a user plane function network element; the access network device obtains delay budget information of a data packet set to which the data packet belongs; and the access network device sends the data packet to a terminal device based on the delay budget information of the data packet set. At least one data packet in the data packet set carries the delay budget information of the data packet set, and the delay budget information of the data packet set is determined based on a time point at which the user plane function network element receives the data packet set and a user plane function network element reference receiving time point of the data packet set.

According to the foregoing method, the user plane function network element may determine the delay budget information, for example, a delay correction amount, of the data packet set based on the receiving time point of the data packet set and the user plane function network element reference receiving time point of the data packet set, so that when an access network device that receives the data packet set sends the data packet in the data packet set to a terminal device, impact caused by factors such as network jitter on transmission of the data packet set can be eliminated, thereby improving reliability of delay guarantee for the data packet set.

In a possible design, the delay budget information of the data packet set is a delay correction amount of the data packet set. That the access network device sends the data packet to a terminal device based on the delay budget information of the data packet set includes: The access network device determines an available transmission delay budget of the data packet set based on the delay correction amount and a delay budget of the data packet set; and the access network device sends the data packet to the terminal device based on the available transmission delay budget.

In a possible design, the delay budget information of the data packet set is an available transmission delay budget of the data packet set.

It may be understood that, when the available transmission delay budget of the data packet set determined by the access network device is less than a specific threshold, when sending the data packet in the data packet set to the terminal device, the access network device may send the data packet in the data packet set based on a specific delay budget. For example, when the available transmission delay budget of the data packet set determined by the access network device is less than a delay budget of a data packet set in a QoS requirement, the access network device may send the data packet in the data packet set based on the delay budget of the data packet set in the QoS requirement.

In a possible design, a data connection session for transmitting the data packet set corresponds to a plurality of QoS flows, each of the plurality of QoS flows corresponds to a different delay correction amount, the delay budget information of the data packet set is identification information of a target QoS flow, and the target QoS flow is one of the plurality of QoS flows. That the access network device sends the data packet to a terminal device based on the delay budget information of the data packet set includes: The access network device determines an available transmission delay budget of the data packet set based on a delay correction amount corresponding to the target QoS flow and a delay budget of the data packet set; and the access network device sends the data packet to the terminal device based on the available transmission delay budget.

In a possible design, a data connection session for transmitting the data packet set corresponds to a plurality of QoS flows, each of the plurality of QoS flows corresponds to a different delay budget, the delay budget information of the data packet set is identification information of a target QoS flow, and the target QoS flow is one of the plurality of QoS flows. That the access network device sends the data packet to a terminal device based on the delay budget information of the data packet set includes: The access network device sends the data packet to the terminal device based on a delay budget corresponding to the target QoS flow.

According to an eighth aspect, an embodiment of this application provides a communication method. The method may be performed by an access network device or a module (for example, a chip) used in the access network device. For example, the access network device performs the method. The method includes: The access network device receives a data packet set from a user plane function network element; the access network device determines an available transmission delay budget of the data packet set based on a receiving time point of the data packet set, an access network device reference receiving time point of the data packet set, and a delay budget of the data packet set; and the access network device sends the data packet set to a terminal device based on the available transmission delay budget.

According to the foregoing method, the access network device may determine an actual available transmission delay budget of the data packet set based on the receiving time point of the data packet set, the access network device reference receiving time point of the data packet set, and the delay budget of the data packet set, and perform data packet set transmission scheduling processing. Therefore, impact caused by factors such as network jitter on transmission of the data packet set can be eliminated, thereby improving reliability of delay guarantee for the data packet set.

In a possible design, the method further includes: The access network device receives data packet set information from a session management function network element, where the data packet set information includes a data packet set transmission interval and an access network device reference receiving time point of an X^{th} data packet set in a data connection session (for example, a PDU session) for transmitting the data packet set, where X is a positive integer; and the access network device determines the access network device reference receiving time point of the data packet set based on the access network device reference receiving time point of the X^{th} data packet set and the data packet set transmission interval.

In a possible design, the method further includes: The access network device determines the access network device reference receiving time point of the data packet set based on receiving time points of a plurality of consecutive data packet sets that have been received in a data connection session for transmitting the data packet set.

According to a ninth aspect, an embodiment of this application provides a communication apparatus. The apparatus may be a user plane network element, or may be a chip used in the user plane network element. The apparatus has a function of implementing any implementation method of the first aspect or the fifth aspect. The function may be implemented by hardware, or may be implemented by hardware executing corresponding software. The hardware or the software includes one or more modules corresponding to the function.

According to a tenth aspect, an embodiment of this application provides a communication apparatus. The apparatus may be a policy control network element, or may be a chip used in the policy control network element. The apparatus has a function of implementing any implementation method of the second aspect or the sixth aspect. The function may be implemented by hardware, or may be implemented by hardware executing corresponding software. The hardware or the software includes one or more modules corresponding to the function.

According to an eleventh aspect, an embodiment of this application provides a communication apparatus. The apparatus may be an access network device, or may be a chip used in the access network device. The apparatus has a function of implementing any implementation method of the third aspect, the fourth aspect, the seventh aspect, or the eighth aspect. The function may be implemented by hardware, or may be implemented by hardware executing corresponding software. The hardware or the software includes one or more modules corresponding to the function.

According to a twelfth aspect, an embodiment of this application provides a communication apparatus, including a unit or means (means) configured to perform steps in any implementation method of the first aspect to the eighth aspect.

According to a thirteenth aspect, an embodiment of this application provides a communication apparatus, including a processor and an interface circuit. The processor is configured to: communicate with another apparatus through the interface circuit, and perform any implementation method of the first aspect to the eighth aspect. There are one or more processors.

According to a fourteenth aspect, an embodiment of this application provides a communication apparatus, including a processor coupled to a memory. The processor is configured to invoke a program stored in the memory, to perform any implementation method of the first aspect to the eighth aspect. The memory may be located inside or outside the apparatus. **In** addition, there may be one or more processors.

According to a fifteenth aspect, an embodiment of this application provides a communication apparatus, including a processor and a memory. The memory is configured to store computer instructions. When the apparatus runs, the processor executes the computer instructions stored in the memory, to enable the apparatus to perform any implementation method of the first aspect to the eighth aspect.

According to a sixteenth aspect, an embodiment of this application further provides a computer-readable storage medium. The computer-readable storage medium stores instructions. When the instructions are run on a communication apparatus, any implementation method of the first aspect to the eighth aspect is performed.

According to a seventeenth aspect, an embodiment of this application further provides a computer program product. The computer program product includes a computer program or instructions. When the computer program or the instructions are run by a communication apparatus, any implementation method of the first aspect to the eighth aspect is performed.

According to an eighteenth aspect, an embodiment of this application further provides a chip system, including a processor, configured to perform any implementation method of the first aspect to the eighth aspect.

According to a nineteenth aspect, an embodiment of this application further provides a communication system. The communication system includes a user plane network element and an access network device. The user plane network element is configured to perform any implementation method of the first aspect. The access network device is configured to perform any implementation method of the third aspect.

In a possible design, the communication system further includes a policy control function network element, and the policy control function network element is configured to perform any implementation method of the second aspect.

According to a twentieth aspect, an embodiment of this application further provides a communication system. The communication system includes a user plane network element and an access network device. The user plane network element is configured to perform any implementation method of the fifth aspect. The access network device is configured to perform any implementation method of the seventh aspect.

In a possible design, the communication system further includes a policy control function network element, and the policy control function network element is configured to perform any implementation method of the sixth aspect.

### BRIEF DESCRIPTION OF DRAWINGS

FIG. 1 is a schematic of a 5G network architecture according to an embodiment of this application;
FIG. 2 is a schematic of transmission of a data packet set according to an embodiment of this application;
FIG. 3 is a schematic 1 of a communication method according to an embodiment of this application;
FIG. 4 is a schematic 2 of a communication method according to an embodiment of this application;
FIG. 5 is a schematic 3 of a communication method according to an embodiment of this application;
FIG. 6 is a schematic 4 of a communication method according to an embodiment of this application;
FIG. 7 is a schematic 5 of a communication method according to an embodiment of this application;
FIG. 8 is a schematic 6 of a communication method according to an embodiment of this application;
FIG. 9 is a schematic 7 of a communication method according to an embodiment of this application;
FIG. 10 is a schematic 8 of a communication method according to an embodiment of this application;
FIG. 11 is a schematic 1 of a structure of a communication apparatus according to an embodiment of this application; and
FIG. 12 is a schematic 2 of a structure of a communication apparatus according to an embodiment of this application.

### DESCRIPTION OF EMBODIMENTS

Technical solutions provided in embodiments of this application may be applied to a 5th generation (5th generation, 5G) network, for example, a new radio (new radio, NR) network, may be applied to a communication system evolved after 5G, for example, a 6th generation network, or may be applied to a long term evolution (long term evolution, LTE) network, an LTE frequency division duplex (frequency division duplex, FDD) network, an LTE time division duplex (time division duplex, TDD) network, or the like.

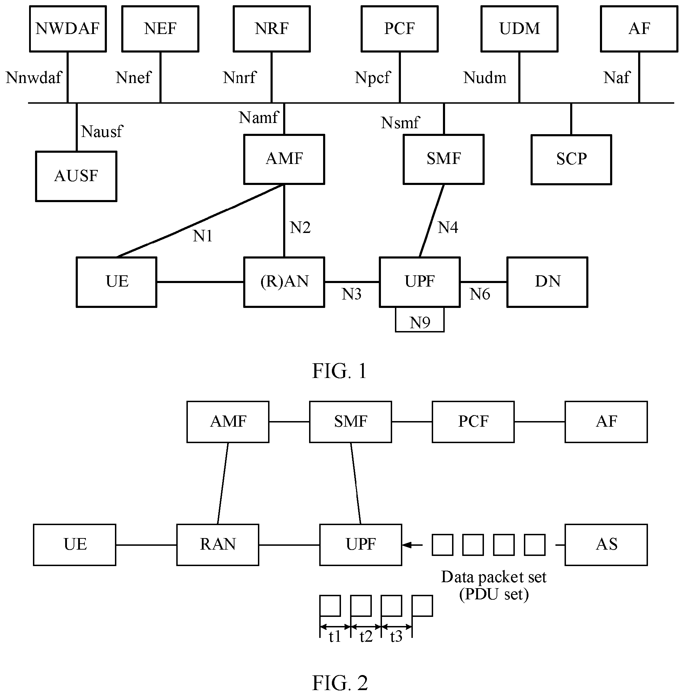

FIG. 1 is a schematic of a 5G network architecture according to an embodiment of this application. The 5G network architecture shown in FIG. 1 may include three parts: a terminal device part, a data network (data network, DN) part, and an operator network part. An example in which a terminal device in FIG. 1 is user equipment (user equipment, UE) is used. The following briefly describes functions of some network elements in the 5G network architecture.

An operator network may include but is not limited to one or more of the following network elements: a network data analytics function (network data analytics function, NWDAF) network element, an authentication server function (authentication server function, AUSF) network element, a network exposure function (network exposure function, NEF) network element, a network repository function (network repository function, NRF) network element, an access and mobility management function (access and mobility management function, AMF) network element, a policy control function (policy control function, PCF) network element, a unified data management (unified data management, UDM) network element, a session management function (session management function, SMF) network element, an access network (access network, AN) or a radio access network (radio access network, RAN), a service control point (service control point, SCP), a user plane function (user plane function, UPF) network element, and the like. In the foregoing operator network, a part other than a radio access network part may be referred to as a core network part. In a possible implementation method, the operator network further includes an application function (application function, AF) network element.

The terminal device (terminal device), which may be referred to as a terminal for short, is a device having a wireless transceiver function. The terminal may be deployed on the land, including an indoor or outdoor device, a handheld device, or a vehicle-mounted device; may be deployed on the water (for example, on a steamer); or may be deployed in the air (for example, on an air plane, a balloon, or a satellite). The terminal device may be a mobile phone (mobile phone), a tablet computer (pad), a computer with a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), user equipment (user equipment, UE), a terminal device used in the internet of things (internet of things, IoT) (for example, a terminal device in a smart factory and a terminal device in smart manufacturing), and the like.

The terminal device may establish a connection to the operator network through an interface (for example, N1 or Uu) provided by the operator network, and use a data service, a voice service, and/or the like provided by the operator network. The terminal device may further access the DN through the operator network, and use an operator service deployed on the DN and/or a service provided by a third party. The third party may be a service party except the operator network and the terminal device, and may provide a data service, a voice service, and/or the like for the terminal device. A specific representation form of the third party may be specifically determined based on an actual application scenario, and is not limited herein.

The RAN is a subnet of the operator network, and is an implementation system between a service node in the operator network and the terminal device. To access the operator network, the terminal device first accesses the RAN, and then may be connected to a service node in a core network via the RAN. A RAN device is a device that provides a wireless communication function for the terminal device, and the RAN device is also referred to as an access network device. The RAN device includes, but is not limited to, a next generation base station (gNodeB, gNB) in 5G, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseBand unit, BBU), a transmission reception point (transmitting and receiving point, TRP), a transmission point (transmitting point, TP), a mobile switching center, and the like.

The AMF network element mainly performs functions such as mobility management and access authentication/authorization, and includes user registration management, reachability detection, SMF network element selection, mobility status conversion management, and the like. In addition, the AMF network element may be further responsible for transferring a user policy between the UE and the PCF network element.

The SMF network element mainly performs functions such as session management (including session establishment, modification, and deletion management), PCF-delivered control policy execution, UPF network element selection, and UE internet protocol (internet protocol, IP) address assignment.

The UPF network element serves as an interface to a data network and is mainly responsible for data packet routing and forwarding; serves as a mobility anchor or an uplink classifier to support routing of a service flow to the data network; and serves as a branching point to support a multi-homed PDU session, and the like.

The PCF network element is mainly responsible for providing rules such as a service data flow and application-based detection rule, a gating control rule, a QoS rule, and a flow-based charging control rule.

The UDM network element is mainly responsible for functions such as storing and managing user subscription data.

The AUSF network element is mainly responsible for performing authentication on a user, to determine whether to allow the user or a device to access a network.

The AF network element mainly transfers a requirement of an application side for a network side, for example, a quality of service (quality of service, QoS) requirement or user status event subscription. The AF network element is mainly configured to interact with a 3rd generation partnership project (3rd generation partnership project, 3GPP) core network to provide services to affect service flow routing, access network capability exposure, policy control, and the like. For example, the AF network element transfers a requirement of an application side for a network side, for example, a quality of service (quality of service, QoS) requirement or user status event subscription.

The NEF network element is mainly configured to support capability and event exposure to, for example, a third-party, edge computing, and an AF.

The NWADF network element is mainly configured to provide functions such as network data collection and analytics based on technologies such as big data and artificial intelligence.

The SCP is configured to perform a function of controlling all services provided by an intelligent network, for example, control a service switching point (service switching point, SSP) to complete a connection function.

The NRF network element may be configured to: provide a network element discovery function, and provide, based on a request of another network element, network element information corresponding to a network element type. The NRF network element further provides network element management services, for example, network element registration, update, and deregistration, and network element status subscription and push.

The DN is a network located outside the operator network. The operator network may access a plurality of DNs, and a plurality of services may be deployed on the DN, to provide services such as data and/or a voice for the terminal device. For example, the DN is a private network of a smart factory, a sensor installed in a workshop of the smart factory may be a terminal device, a control server of the sensor is deployed in the DN, and the control server may serve the sensor. The sensor may communicate with the control server, to obtain instructions of the control server, transmit collected sensor data to the control server according to the instructions, and the like. For another example, the DN is an internal office network of a company, a mobile phone or a computer of an employee of the company may be a terminal device, and the mobile phone or the computer of the employee may access information, data resources, and the like in the internal office network of the company.

In FIG. 1, Nnwdaf, Nausf, Nnef, Nnrf, Namf, Npcf, Nsmf, Nudm, Naf, N1, N2, N3, N4, N6, and N9 are interface sequence numbers. For meanings of these interface sequence numbers, refer to meanings defined in the 3rd generation partnership project (3rd generation partnership project, 3GPP) standard protocol. This is not limited herein.

It may be understood that the foregoing network elements or functions may be network elements in a hardware device, may be software functions running on dedicated hardware, or may be virtualized functions instantiated on a platform (for example, a cloud platform). Optionally, the foregoing network element or function may be implemented by one device, may be jointly implemented by a plurality of devices, or may be implemented by one function module in one device. This is not specifically limited in embodiments of this application.

It should be noted that FIG. 1 is merely an example of a network architecture to which embodiments of this application are applicable, and does not constitute any limitation on embodiments of this application. Embodiments of this application may be alternatively applied to another network architecture, for example, a future mobile communication network architecture (for example, a 6G network architecture).

The foregoing describes application scenarios to which embodiments of this application are applicable. The following describes terms and technical features related to embodiments of this application.

A quality of service (quality of service, QoS) flow (flow) is used to carry a service flow. In a 5G network, when a terminal device has a service communication requirement, a protocol data unit (protocol data unit, PDU) session is established, and it is a corresponding QoS flow that specifically carries a service flow in a PDU session. Specifically, the terminal device obtains an internet protocol (internet protocol, IP) address by establishing a PDU session, to interact with an external application server, to implement service communication. However, in a 5G network, based on service flow description information, for example, a service data flow (service data flow, SDF) template (template), corresponding services are mapped to different QoS flows, to perform corresponding QoS processing.

A GTP-U tunnel is a general packet radio service (general packet radio service, GPRS) tunneling protocol-user plane (GPRS tunneling protocol-user plane) tunnel. In a PDU session establishment process, the GTP-U tunnel is used for a connection between the RAN and the UPF network element. The GTP-U tunnel is at a PDU session granularity. To be specific, a GTP-U tunnel between the RAN and the UPF is established for each PDU session. In the PDU session, data sent by a terminal device to an application server and data sent by the application server to the terminal device are transmitted through the GTP-U tunnel between the RAN and the UPF located between the terminal device and the application service.

A QoS flow identifier (QoS flow identifier, QFI) is a unique identifier for identifying a different QoS flow in a PDU session.

Media segment: In a processing process such as encoding and decoding, a media frame may be divided into a plurality of segments on which encoding, decoding, and other processing are separately performed. Each segment obtained by dividing the media frame may be referred to as a media segment, or may be referred to as a segment.

Currently, to cope with a challenge posed by an explosive amount of data in the new media industry to a network transmission capability, data processing granularities corresponding to XR services such as a virtual reality (virtual reality, VR) service, an augmented reality (augmented reality, AR) service, a mixed reality (mixed reality, MR) service, and a cloud extensible reality (cloud XR) service in an encoding and transmission process are no longer a data packet granularity, but a granularity of a PDU set corresponding to a media frame, a media fragment, or the like, that is, a data packet set corresponding to a media frame, a media segment, or the like is used as a granularity. However, in a current QoS mechanism, service guarantee is still performed based on a data packet granularity. Data packets in a same QoS flow correspond to a same QoS parameter, for example, correspond to a same data packet error rate (packet error rate, PER) and a same data packet delay budget (packet delay budget, PDB). Data packets corresponding to a same QoS parameter are processed equally in a transmission process, and cannot meet a transmission requirement at a data packet set granularity.

In an example, as shown in FIG. 2, for a data packet set sent by an application server (application server, AS), due to factors such as an egress bandwidth limit of the AS and impact such as transmission jitter caused by a transmission route, a plurality of data packets in the data packet set arrive at a UPF network element at different time points. Duration by which a 2^{nd} data packet in the data packet set arrives at a UPF network element later than a 1^{st} data packet (that is, duration by which the 2^{nd} data packet is late received by the UPF network element) is t1, duration by which a 3^{rd} data packet arrives at the UPF network element later than the 2^{nd} data packet is t2, and duration by which a 4^{th} data packet arrives at the UPF network element later than the 3^{rd} data packet is t3. If delay guarantee is still performed based on a delay budget (for example, a PDB) of a data packet granularity or a delay budget of a unified data packet set granularity, the 2^{nd} data packet in the data packet set is received by a terminal device after a delay of the duration t1 relative to the 1^{st} data packet, the 3^{rd} data packet is received by the terminal device after a delay of the duration t1+t2 relative to the 1^{st} data packet, and the 4^{th} data packet is received by the terminal device after a delay of the duration t1+t2+t3 relative to the 1^{st} data packet. It is possible that only some data packets in the data packet set meet a delay requirement. For example, only the 1^{st} data packet meets the delay requirement, and other data packets do not meet the delay requirement. Therefore, how to provide service guarantee such as delay guarantee for a transmission requirement at a data packet set granularity becomes an urgent problem to be resolved.

Based on this, this application proposes a communication method, to reuse a delay guarantee mechanism at a data packet granularity to implement delay guarantee at a data packet set granularity, thereby guaranteeing service experience of a user. The following describes, in detail with reference to the accompanying drawings, the communication method provided in embodiments of this application.

It should be understood that the communication method provided in embodiments of this application may be applied to the communication system shown in FIG. 1. An access network device, a user plane function network element, an access and mobility management function network element, a session management function network element, a policy control function network element, and an application function network element in embodiments of this application may be the RAN, the UPF network element, the AMF network element, the SMF network element, the PCF network element, and the AF network element in FIG. 1, or may be network elements that have functions of the RAN, the UPF network element, the AMF network element, the SMF network element, the PCF network element, and the AF network element in a future communication network such as a 6th generation (6th generation, 6G) network. This is not limited in embodiments of this application.

In addition, it should be noted that a service in embodiments of this application may be an XR service (for example, a VR service, an AR service, an MR service, or a cloud XR service), a voice service, or the like. This is not limited in embodiments of this application. For ease of understanding of embodiments of this application, the following provides descriptions by using an example in which a service in embodiments of this application is an XR service. Correspondingly, service data in embodiments of this application may be understood as a media frame, a media segment, or the like.

In addition, it should be understood that ordinal numerals such as "first" and "second" in embodiments of this application are used to distinguish between a plurality of objects, and are not intended to limit sizes, content, an order, a time sequence, priorities, or importance degrees of the plurality of objects. For example, a first threshold and a second threshold may be a same threshold, or may be different thresholds. In addition, this type of name does not indicate that values, corresponding parameters, priorities, importance degrees, or the like of the two thresholds are different.

In embodiments of this application, unless otherwise specified, a quantity of nouns represents "a singular noun or a plural noun", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof refers to any combination of these items, including any combination of singular items (pieces) or plural items (pieces). For example, at least one of a, b, or c represents: a, b, c, a and b, a and c, b and c, or a, b, and c, where a, b, and c may be singular or plural.

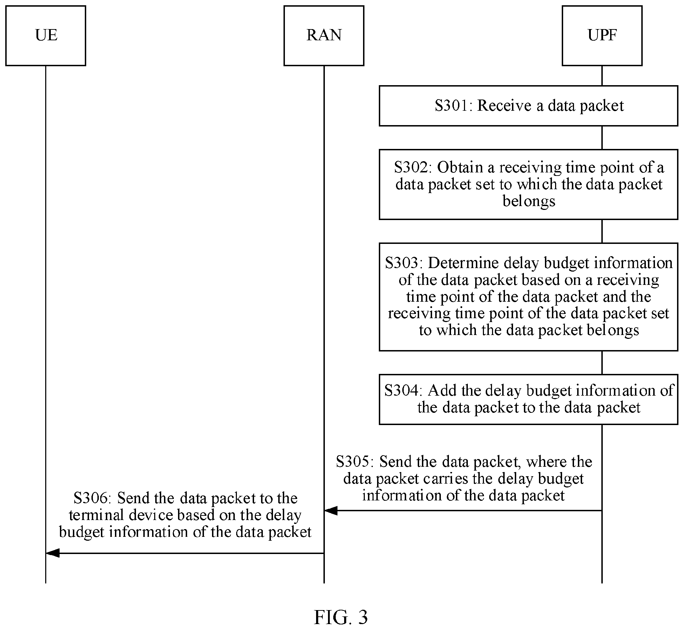

FIG. 3 is a schematic 1 of a communication method according to an embodiment of this application. A terminal device, an access network device, and a user plane function network element are represented by UE, a RAN, and a UPF, respectively in FIG. 3. The method includes the following steps.

S301: A user plane function network element receives a data packet.

S302: The user plane function network element obtains a receiving time point of a data packet set to which the data packet belongs.

In some implementations, when a service of a terminal device is enabled (for example, when an application corresponding to the service is enabled), the terminal device may be triggered to request to establish a data connection session (for example, a PDU session, for example, sending a PDU session establishment request to a session management function network element). The session management function network element establishes a GTP-U tunnel between an access network device accessed by the terminal device and the user plane function network element for a data connection session (for example, a PDU session). The GTP-U tunnel may be for transmitting service data sent to the terminal device and service data sent by the terminal device.

When an application server needs to send service data such as media content to the terminal device, after encoding the media content into a media frame or a media segment, the application server generates a data packet set corresponding to the media frame or the media segment, and sends the data packet set to the terminal device. The data packet set first arrives at the user plane function network element. The user plane function network element receives a data packet in the data packet set from the application server, and records a receiving time point of each data packet in the data packet set.

The user plane function network element may determine a correspondence between a data packet and a data packet set by using an M field, a timestamp, an RTP header extension field, or the like of a real-time transport protocol (real-time transport protocol, RTP) header of a data packet. This is not limited herein.

In an example, the application server may add a data packet set tailer identifier (for example, a media frame tailer identifier) to an M field of an RTP header of a last data packet in a data packet set, and the user plane function network element may determine, based on the M field of the RTP header of the received data packet, the data packet set to which the data packet belongs.

In addition, the application server may further add a same timestamp to RTP headers of data packets in a same data packet set, and the user plane function network element may further determine, by obtaining the timestamp in the RTP headers of the data packets, the data packet set to which the data packets belong. Alternatively, the application server may further add, to an RTP header extension field of a data packet, identifiers of a first and a last data packets in the belonging data packet set, and the user plane function network element may further determine, by obtaining information about the RTP header extension field of the data packet, the data packet set to which the data packet belongs.

In addition, it should be understood that the receiving time point of the data packet set may be a time point at which the user plane function network element receives a 1^{st} data packet in the data packet set, may be a time point at which the user plane function network element receives a data packet corresponding to a smallest sequence number or serial number in the data packet set, may be a time point of receiving a data packet that carries an identifier of a 1^{st} data packet in the data packet set, or the like. This is not limited in this embodiment of this application.

S303: The user plane function network element determines delay budget information of the data packet based on a receiving time point of the data packet and the receiving time point of the data packet set to which the data packet belongs.

S304: The user plane function network element adds the delay budget information of the data packet to the data packet.

S305: The user plane function network element sends the data packet to the access network device. Correspondingly, the access network device receives the data packet, where the data packet carries the delay budget information of the data packet.

S306: The access network device sends the data packet to the terminal device based on the delay budget information of the data packet.

In this embodiment of this application, the user plane function network element may determine the delay budget information of the data packet based on the receiving time point of the data packet and the receiving time point of the data packet set to which the data packet belongs, and may send the data packet after adding the delay budget information of the data packet to the data packet, for example, after adding the delay budget information of the data packet to a GTP-U header of the data packet. The delay budget information of the data packet may be a delay offset of the data packet, an available transmission delay budget of the data packet, identification information of a target QoS flow for transmitting the data packet in a plurality of QoS flows corresponding to a data connection session to which the data packet belongs, or the like. After receiving the data packet, the access network device may perform transmission scheduling processing based on the delay budget information of the data packet, for example, determining, based on the delay budget information of the data packet, a bandwidth resource, a modulation and coding scheme, and the like for sending the data packet to the terminal device, to meet a delay requirement of the data packet and a delay requirement of the data packet set to which the data packet belongs.

The following provides descriptions with reference to specific delay budget information of a data packet.

Implementation A1: The delay budget information of the data packet is identification information of a target QoS flow for transmitting a data packet in a plurality of QoS flows corresponding to a data connection session (for example, a PDU session) to which the data packet belongs.

In implementation A1, different from a QoS mechanism at a data packet granularity in which only one QoS flow is established based on a QoS requirement, in this embodiment of this application, a plurality of QoS flows may be established based on a QoS requirement at a data packet set granularity. Each of the plurality of QoS flows corresponds to a different delay offset, or each of the plurality of QoS flows corresponds to a different delay budget. Data packets in a data packet set may be transmitted in a plurality of QoS flows, to provide service guarantee for the data packet set. The following provides descriptions with reference to specific examples.

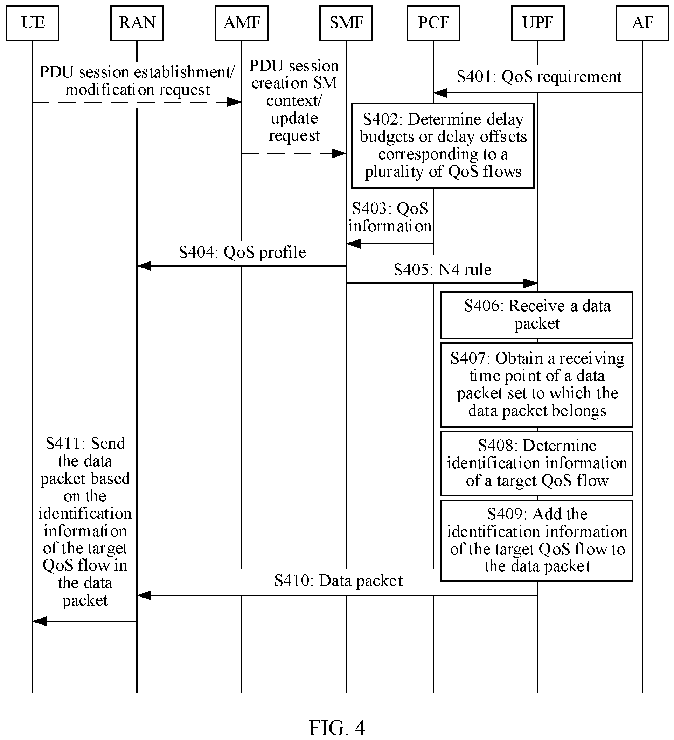

FIG. 4 is a schematic 2 of a communication method according to an embodiment of this application. A terminal device, an access network device, a user plane function network element, an access and mobility management function network element, a session management function network element, a policy control function network element, and an application function network element are represented by UE, a RAN, a UPF, an AMF, an SMF, a PCF, and an AF, respectively in FIG. 4. The method includes the following steps.

S401: An application function network element sends a QoS requirement to a policy control function network element. Correspondingly, the policy control function network element receives the QoS requirement.

The QoS requirement includes a delay budget of a data packet set in a data connection session. That is, the QoS requirement includes a delay budget for a data packet set granularity. All data packet sets in a service flow transmitted in the data connection session need to meet the delay budget.

For example, the data connection session is a PDU session. The application function network element may notify, through an N33 interface (via a network capability exposure function network element) or an N5 interface, the policy control function network element of a QoS requirement of a data packet set granularity corresponding to a service data flow (service data flow, SDF) template in the PDU session. For example, the application function network element may invoke, through the N33 interface, a QoS application function session (Nnef_AFSessionWithQoS) service on a network capability exposure function network element side to notify the policy control function network element of the QoS requirement of the data packet set granularity corresponding to the SDF template in the PDU session, or may invoke a policy authorization (Npcf_Policy Authorize) service on a policy control function network element side to notify the policy control function network element of the QoS requirement of the data packet set granularity corresponding to the SDF template in the PDU session.

Specifically, the application function network element may send an AF request (request) message to the policy control function network element, and include, in the AF request message, flow description information of the SDF template in the PDU session. The flow description information of the SDF template may be an IP 5-tuple (including a source/destination IP address, a source/destination port number, and a transport layer protocol type) of a data packet corresponding to the SDF template, an application ID (the application ID corresponds to a service, and may be for service flow detection), and the QoS requirement of the data packet set granularity, for example, a delay budget of a data packet set in the PDU session and an error rate.

S402: The policy control function network element determines, based on the QoS requirement, a delay budget or a delay offset corresponding to each of a plurality of QoS flows of the data connection session. Each of the plurality of QoS flows corresponds to a different delay budget or a different delay offset.

The policy control function network element determines, based on the QoS requirement from the application function network element, a QoS parameter corresponding to each of the plurality of QoS flows of the data connection session. For example, a QoS parameter such as the delay budget or the delay offset corresponding to each of the plurality of QoS flows of the data connection session is determined.

The delay budget corresponding to the QoS flow may indicate a time period in which transmission, between a terminal device and a user plane function network element, of a data packet transmitted by using the QoS flow can be delayed (or may be delayed). In this embodiment of this application, to ensure that all data packets in the data packet set are transmitted to the terminal device within the delay budget of the data packet set, the delay budget that corresponds to each of the plurality of QoS flows and that is determined by the policy control function network element is less than or equal to the delay budget of the data packet set.

In a possible implementation, the policy control function network element may determine, based on the delay budget of the data packet set, a quantity of QoS flows of the data connection session, and a predefined delay budget interval, the delay budget corresponding to each of the plurality of QoS flows of the data connection session. For example, when the QoS requirement includes that the delay budget of the data packet set in the data connection session is 20 ms, the predefined quantity of QoS flows in the data connection session is 2, and the predefined delay budget interval is 5 ms, the policy control function network element may determine that delay budgets corresponding to the two QoS flows in the data connection session are 20 ms and 15 ms respectively.

In another possible implementation, when determining the delay budget corresponding to each of the plurality of QoS flows of the data connection session, the policy control function network element may further determine, based on the delay budget of the data packet set, maximum continuous sending duration of the data packet set, and a plurality of predefined delay budgets, a quantity of QoS flows of the data connection session and the delay budget corresponding to each of the plurality of QoS flows. In an example, the predefined delay budgets include 20 ms, 15 ms, and 10 ms. The QoS requirement includes that the delay budget of the data packet set in the data connection session is 20 ms, and the maximum continuous sending duration of the data packet set is 4 ms (that is, a maximum interval from sending a first data packet in the data packet set by an application server to completing sending of a last data packet is 4 ms). The policy control function network element may determine, based on delay budgets "20 ms and 15 ms" included in the delay budget "20 ms" of the data packet set and a maximum available transmission delay budget "15 ms" not greater than "16 ms (20 ms - 4 ms)", that there are two QoS flows of the data connection session, and delay budgets corresponding to the two QoS flows are 20 ms and 15 ms respectively.

In addition, the delay offset corresponding to the QoS flow may indicate a difference between the delay budget of the data packet set in the data connection session included in the QoS requirement and the delay budget corresponding to the QoS flow. In this embodiment of this application, to ensure that all data packets in the data packet set are transmitted to the terminal device within the delay budget of the data packet set, the delay offset that corresponds to each of the plurality of QoS flows and that is determined by the policy control function network element is less than the delay budget of the data packet set, that is, the delay budget corresponding to each of the plurality of QoS flows is less than or equal to the delay budget of the data packet set.

In an example, the QoS requirement received by the policy control function network element from the application function network element includes that the delay budget of the data packet set in the data connection session is 20 ms, the predefined quantity of QoS flows in the data connection session is 2, and the predefined delay budget interval is 5 ms. The policy control function network element may determine that delay offsets corresponding to the two QoS flows in the data connection session are 0 ms (that is, the delay budget corresponding to the QoS flow is 20 ms - 0 ms) and 5 ms (that is, the delay budget corresponding to the QoS flow is 20 ms - 5 ms) respectively.

For a specific implementation of determining, by the policy control function network element based on the QoS requirement from the application function network element, the delay offset corresponding to each of the plurality of QoS flows of the data connection session, refer to an implementation of determining the delay budget corresponding to each of the plurality of QoS flows of the data connection session. Details are not described again.

In addition, it should be understood that QoS parameters, other than delay budgets or delay offsets, corresponding to the plurality of QoS flows of the data connection session may be the same. For example, PERs corresponding to the plurality of QoS flows are the same as PERs in the QoS requirement from the application function network element.

S403: The policy control function network element sends QoS information to a session management function network element. Correspondingly, the session management function network element receives the QoS information, where the QoS information includes the delay budget or the delay offset corresponding to each of the plurality of QoS flows of the data connection session.

The QoS information may further include flow description information of SDF templates corresponding to the plurality of QoS flows, and the like.

That the data connection session is a PDU session is still used an example. In a possible implementation, the policy control function network element may initiate a PDU session modification procedure, and send the QoS information to the session management function network element. For example, the policy control function network element may send the QoS information to the session management function network element by sending, to the session management network element, a session management (session management, SM) policy association modification request (for example, SM policy association modification request) message that carries the QoS information.

In another possible implementation, if the terminal device initiates a PDU session establishment or modification procedure due to service starting or other reasons, to carry a corresponding service, the terminal device may send a PDU session establishment/modification request (PDU session establishment/modification request) message to an access and mobility management function network element. The access and mobility management function network element sends the PDU session establishment/modification request to the session management function network element. The policy control function network element may further send the QoS information to the session management function network element in a session management policy association establishment or modification procedure initiated by the session management function network element.

In an example, if the terminal device sends a PDU session establishment/modification request message to the access and mobility management function network element due to service starting or other reasons, the access and mobility management function network element sends the PDU session establishment/modification request to the session management function network element in a PDU session creation session management (session management, SM) context/update request (Nsmf_PDU session_create SM context/update request) message. After receiving the PDU session establishment/modification request, the session management function network element may send a session management policy association establishment/modification request to the policy control function network element, to trigger the policy control function network element to send the QoS information to the session management function network element in a session management policy association establishment or modification procedure initiated by the session management function network element.

The session management function network element receives the QoS information from the policy control function network element, and establishes a plurality of QoS flows for the data connection session based on the QoS information. In an example, if the QoS information includes delay budgets 20 ms and 15 ms that respectively correspond to two QoS flows of the data connection session, the session management function network element establishes, for the data connection session, a QoS flow corresponding to the delay budget 20 ms and a QoS flow corresponding to the delay budget 15 ms.

S404: The session management function network element sends a QoS profile (profile) to an access network device. Correspondingly, the access network device receives the QoS profile.

The QoS profile includes the delay budget corresponding to each of the plurality of QoS flows or the delay offset corresponding to each of the plurality of QoS flows.

In an example, after establishing the plurality of QoS flows for the data connection session based on the QoS information, the session management function network element may further generate QoS profiles corresponding to the plurality of QoS flows, and send the QoS profiles to the access network device. The QoS profile may include identification information of each of the plurality of QoS flows, for example, a 5QI of each of the plurality of QoS flows, and the delay budget corresponding to each of the plurality of QoS flows or the delay offset corresponding to each of the plurality of QoS flows. The QoS profile may further include information such as the delay budget of the data packet set. Specifically, the session management function network element may send the QoS profile to the access network device by using an N2 SM message (message). In other words, the session management function network element sends the QoS profile to the access network device via the access and mobility management function network element.

In some implementations, when the QoS profile is sent to the access network device, indication information may be further carried, to indicate the access network device to perform coordinated processing on the plurality of QoS flows configured in the QoS profile. In other words, the access network device is indicated to uniformly schedule all data packets belonging to a same data packet set even if the data packets in the same data packet set are transmitted in different QoS flows. For example, when network congestion occurs, the access network device determines, at a data packet set granularity, whether to perform discarding processing on the data packet set (that is, all data packets in the data packet set), instead of determining, at a data packet granularity, whether to perform discarding processing.

S405: The session management function network element sends an N4 rule (rule) to the user plane function network element. Correspondingly, the user plane function network element receives the N4 rule.

The N4 rule includes a QoS parameter. Specifically, the QoS parameter may include the delay budget corresponding to each of the plurality of QoS flows or the delay offset corresponding to each of the plurality of QoS flows. The QoS parameter may further include the identification information of each of the plurality of QoS flows, for example, a 5QI, and the flow description information of the SDF templates corresponding to the plurality of QoS flows.

Specifically, after establishing the plurality of QoS flows for the data connection session based on the QoS information, the session management function network element may further generate the N4 rule including the QoS parameter, and may send the N4 rule to the user plane function network element in an N4 session establishment/modification request (N4 session establishment/modification request) message or the like.

In some implementations, when the N4 rule is sent to the user plane function network element, indication information may be further carried, to indicate the user plane function network element to perform coordinated processing on the plurality of QoS flows configured in the N4 rule. In other words, the user plane function network element is indicated to uniformly schedule all data packets belonging to a same data packet set even if the data packets in the same data packet set are transmitted in different QoS flows. Optionally, the session management network element may further send delay budget information of the data packet set to the user plane function network element.

In addition, the N4 rule may further include a data packet set transmission interval and a user plane function network element reference receiving time point of an X^{th} data packet set corresponding to an SDF template in the data connection session, to indicate a reference receiving time point of each data packet set that corresponds to the SDF template and that is transmitted by the user plane function network element by using the PDU session. It should be understood that, in this embodiment of this application, the SDF template may also be referred to as an SDF filter (filter), and the user plane function network element reference receiving time point of the X^{th} data packet set corresponding to the SDF template may indicate a time point at which a 1^{st} data packet in the X^{th} data packet set that meets an SDF template filtering rule or identification rule should be received by the user plane function network element in an ideal case (for example, when there is no impact of, for example, network jitter), a time point at which a data packet corresponding to a smallest sequence number or serial number in the X^{th} data packet set should be received by the user plane function network element in an ideal case, or the like. In addition, it should be understood that a sequence of S404 and S405 is not limited in this embodiment of this application. S404 and S405 may be performed simultaneously, S404 may be performed before S405, or S405 may be performed before S404.

S406: The user plane function network element receives a data packet.

S407: The user plane function network element obtains a receiving time point of a data packet set to which the data packet belongs.

After a data connection session establishment or modification procedure is completed, when the application server needs to send service data such as a media frame or a media segment to the terminal device, the application server may process encoded service data such as the media frame or the media segment, generate a data packet set corresponding to the media frame or the media segment, and send the data packet set to the user plane function network element. The user plane function network element receives a data packet in the data packet set from the application server, and records a receiving time point of each data packet in the data packet set.

S408: The user plane function network element determines identification information of a target QoS flow based on a receiving time point of the data packet and the receiving time point of the data packet set to which the data packet belongs.

In a possible implementation, if the data connection session corresponds to a plurality of QoS flows, and each of the plurality of QoS flows corresponds to a different delay offset, the user plane function network element may determine a delay offset of the data packet based on the receiving time point of the data packet and the receiving time point of the data packet set to which the data packet belongs, and determine the identification information of the target QoS flow based on the delay offset of the data packet and the delay offset corresponding to each of the plurality of QoS flows.

In an example, the data connection session corresponds to two QoS flows: a QoS flow 1 and a QoS flow 2. A delay offset corresponding to the QoS flow 1 is 0 ms, and an applicable delay offset range is less than or equal to 0 ms. A delay offset corresponding to the QoS flow 2 is 5 ms, and an applicable delay offset range is greater than 0 ms and less than or equal to 5 ms. If a receiving time point of a data packet A is 18^{th} ms, and a receiving time point of a data packet set to which the data packet A belongs is 16^{th} ms, the user plane function network element may determine that a delay offset of the data packet A is 2 ms. 2 ms is within the range greater than 0 ms and less than or equal to 5 ms. Therefore, it may be determined that the target QoS flow is the QoS flow 2, and it may be determined that the identification information of the target QoS flow is identification information of the QoS flow 2, for example, a 5QI of the QoS flow 2.

In another possible implementation, if the data connection session corresponds to a plurality of QoS flows, and each of the plurality of QoS flows corresponds to a different delay budget, the user plane function network element determines an available transmission delay budget of the data packet based on the receiving time point of the data packet, the receiving time point of the data packet set to which the data packet belongs, and a delay budget of the data packet set; and determines the identification information of the target QoS flow based on the available transmission delay budget of the data packet and the delay budget corresponding to each of the plurality of QoS flows.

In an example, the data connection session corresponds to two QoS flows: a QoS flow 1 and a QoS flow 2. A delay budget corresponding to the QoS flow 1 is 20 ms, which can meet a transmission requirement of a data packet whose available transmission delay budget is greater than 20 ms, and an applicable available transmission delay budget range is greater than or equal to 20 ms. A delay budget corresponding to the QoS flow 2 is 15 ms, which can meet a transmission requirement of a data packet whose available transmission delay budget is greater than or equal to 15 ms and less than 20 ms, and an applicable available transmission delay budget range is less than 20 ms and greater than or equal to 15 ms. If a receiving time point of the data packet A is 18^{th} ms, a receiving time point of a data packet set to which the data packet A belongs is 16^{th} ms, and a delay budget of the data packet set is 20 ms, the user plane function network element may determine that an available transmission delay budget of the data packet A is 18 ms (that is, 20 ms - (18 ms - 16 ms)). 18 ms is within the range less than 20 ms and greater than or equal to 15 ms. Therefore, it may be determined that the target QoS flow is the QoS flow 2, and it may be determined that the identification information of the target QoS flow is identification information of the QoS flow 2, for example, a 5QI of the QoS flow 2.

In some implementations, due to impact of a factor such as network jitter, a time point at which the data packet set arrives at the user plane function network element may be different from a user plane function network element reference receiving time point of the data packet set. In this embodiment of this application, the user plane function network element may determine, based on the receiving time point of the data packet set to which the data packet belongs and the user plane function network element reference receiving time point of the data packet set to which the data packet belongs, a delay correction amount of the data packet set to which the data packet belongs, and correct the delay budget information of the data packet based on the delay correction amount. It should be understood that the receiving time point of the data packet set may be a time point at which the user plane function network element receives a 1^{st} data packet in the data packet set, may be a time point at which the user plane function network element receives a data packet corresponding to a smallest sequence number or serial number in the data packet set, may be a time point of receiving a data packet that carries an identifier of a 1^{st} data packet in the data packet set, or the like. The user plane function network element reference receiving time point of the data packet set may be a time point at which the user plane function network element should receive the 1^{st} data packet in the data packet set in an ideal case (for example, when there is no impact of, for example, network jitter), may be a time point at which the user plane function network element should receive the data packet corresponding to the smallest sequence number or serial number in the data packet set in an ideal case, may be a time point at which the data packet that carries the identifier of the 1^{st} data packet in the data packet set should be received in an ideal case, or the like.

In an example, a receiving time point, for the user plane function network element, of a data packet set to which a data packet A belongs is 16^{th} ms, but a user plane function network element reference receiving time point of the data packet set to which the data packet A belongs is 15^{th} ms. Therefore, the user plane function network element may determine, based on a difference between the 16^{th} ms and the 15^{th} ms, that a delay correction amount is 1 ms. The delay offset or the available transmission delay budget of the data packet determined by the user plane function network element may be corrected based on the delay correction amount, and identification information of the target QoS flow determined based on a corrected delay offset or available transmission delay budget of the data packet is used as identification information of the target QoS flow that is actually added to the data packet. In an example, the delay offset is 2 ms, and a new delay offset obtained through the correction based on the delay correction amount 1 ms is 3 ms.

In some implementations, the user plane function network element may determine, based on the data packet set transmission interval and the user plane function network element reference receiving time point of the X^{th} data packet set corresponding to the SDF template in the data connection session, the user plane function network element reference receiving time point of the data packet set to which the data packet belongs, where X is a positive integer.

In an example, X is 1, the reference receiving time point of the X^{th} data packet set corresponding to the SDF template in the data connection session is 15^{th} ms, the data packet set transmission interval is 15 ms, and the data packet set to which the data packet received by the user plane function network element belongs is a 3^{rd} data packet set corresponding to the SDF template in the PDU session. In this case, it may be determined that the reference receiving time point of the data packet set to which the data packet belongs is 45^{th} ms.

In some other implementations, the user plane function network element may further determine, based on receiving time points of a plurality of consecutive data packet sets that have been received and that correspond to the SDF template in the data connection session, the user plane function network element reference receiving time point of the data packet set to which the data packet belongs.

In an example, the plurality of consecutive data packet sets that have been received are a 1^{st} data packet set to an 11^{th} data packet set, and receiving time points of the 1^{st} data packet set to the 11^{th} data packet set are 15^{th} ms, 31^{st} ms, 45^{th} ms, ..., 150^{th} ms, and 165^{th} ms respectively. In this case, the user plane function network element may predict, based on the receiving time points of the 1^{st} data packet set to the 11^{th} data packet set and a time sequence-based budgeting algorithm, a user plane function network element receiving time point of the data packet set to which the data packet belongs, and uses the receiving time point as the user plane function network element reference receiving time point of the data packet set to which the data packet belongs.

S409: The user plane function network element adds the identification information of the target QoS flow to the data packet.

S410: The user plane function network element sends the data packet to the access network device. Correspondingly, the access network device receives the data packet.

After determining the identification information of the target QoS flow in the data packet, and adding the identification information of the target QoS flow to the data packet, the user plane function network element may map, based on the identification information of the target QoS flow, the data packet to a QoS flow that is in the plurality of QoS flows and that matches the identification information of the target QoS flow for transmission.

S411: The access network device sends the data packet to the terminal device based on the identification information of the target QoS flow in the data packet.

In a possible implementation, if the data connection session corresponds to a plurality of QoS flows, and each of the plurality of QoS flows corresponds to a different delay offset, the access network device may determine the available transmission delay budget of the data packet based on a delay offset corresponding to the target QoS flow and the delay budget of the data packet set, and send the data packet to the terminal device based on the available transmission delay budget.

In another possible implementation, if the data connection session corresponds to a plurality of QoS flows, and each of the plurality of QoS flows corresponds to a different delay budget, the access network device may send the data packet to the terminal device based on a delay budget corresponding to the target QoS flow.

Specifically, because a device environment (for example, a used wired line or wireless line) for data transmission between the access network device and the user plane function network element is usually fixed, a transmission delay between the access network device and the user plane function network element is usually fixed. In other words, a data packet transmission budget (CN-PDB for short) between the access network device and the user plane function network element is known. After determining the available transmission delay budget of the data packet or the delay budget corresponding to the data packet, the access network device can determine a data packet transmission budget (AN-PDB for short) between the access network and the terminal device by subtracting the CN-PDB from the available transmission delay budget of the data packet or the delay budget corresponding to the data packet. The access network device can determine, based on the AN-PDB, a bandwidth resource, a modulation and coding scheme, and the like for sending the data packet to the terminal device.

According to the foregoing implementation A1, all the data packets in the data packet set can be sent to the terminal device within a delay budget at a data packet set granularity, to meet a delay requirement of the data packet set granularity.

Implementation A2: The delay budget information of the data packet is a delay offset of the data packet or an available transmission delay budget of the data packet.

Different from implementation A1 (in the communication method shown in FIG. 4) in which a plurality of QoS flows corresponding to different delay budgets or delay offsets are established and data packets in a data packet set are transmitted in the plurality of QoS flows, to ensure that the data packets in the data packet set are sent to a terminal device side within specified time, in implementation A2, data packets in a data packet set may be transmitted in a same QoS flow. A user plane function network element side determines delay budget information such as an available transmission delay budget or a delay offset of a data packet based on a receiving time point of the data packet in the data packet set and a receiving time point of the data packet set, and notifies an access network device side of the delay budget information. The access network device side performs corresponding transmission scheduling processing, for example, determines a bandwidth resource and a modulation and coding scheme for sending the data packet, to ensure that the data packet is sent to the terminal device side within specified time.

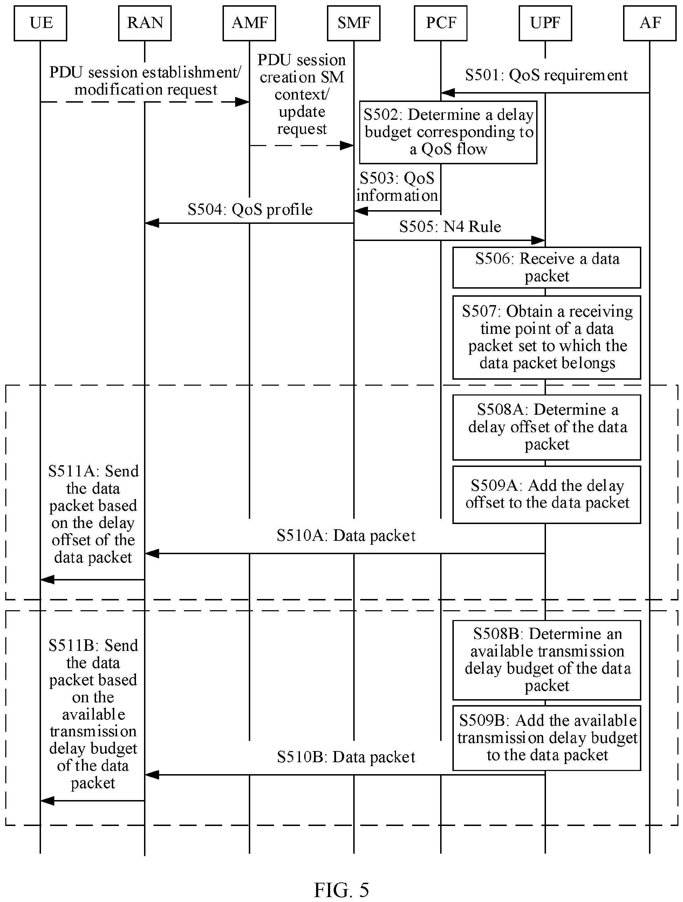

FIG. 5 is a schematic 3 of a communication method according to an embodiment of this application. A terminal device, an access network device, a user plane function network element, an access and mobility management function network element, a session management function network element, a policy control function network element, and an application function network element are represented by UE, a RAN, a UPF, an AMF, an SMF, a PCF, and an AF, respectively in FIG. 5. The method includes the following steps.

S501: An application function network element sends a QoS requirement to a policy control function network element. Correspondingly, the policy control function network element receives the QoS requirement, where the QoS requirement includes a delay budget of a data packet set in a data connection session.

S502: The policy control function network element determines, based on the QoS requirement, a delay budget corresponding to a QoS flow of the data connection session.

S503: The policy control function network element sends QoS information to a session management function network element. Correspondingly, the session management function network element receives the QoS information.

S504: The session management function network element sends a QoS profile to an access network device. Correspondingly, the access network device receives the QoS profile.

S505: The session management function network element sends an N4 rule to a user plane function network element. Correspondingly, the user plane function network element receives the N4 rule.

In S401 to S405 in FIG. 4, the policy control function network element determines, based on the delay budget of the data packet set included in the QoS requirement, the delay budget or the delay offset corresponding to each of the plurality of QoS flows of the data connection session, and the session management function network element establishes the plurality of QoS flows for the data connection session based on the delay budget or the delay offset corresponding to each of the plurality of QoS flows of the data connection session, and sends information such as the delay budget or the delay offset corresponding to each QoS flow to the access network device, the terminal device, and the user plane function network element by using the QoS profile, the QoS rule, and the N4 profile respectively. Different from that, in S501 to S505 in FIG. 5, the policy control function network element determines a delay budget of a QoS flow of the data connection session based on the delay budget of the data packet set included in the QoS requirement, and the session management function network element establishes the QoS flow for the data connection session based on the delay budget corresponding to the QoS flow, and sends information such as the delay budget corresponding to the QoS flow to the access network device, a terminal device, and the user plane function network element by using a QoS profile, a QoS rule, and an N4 profile respectively.

For specific implementation of S501 to S505, refer to implementation of S401 to S405. Details are not described again.

S506: The user plane function network element receives a data packet.

S507: The user plane function network element obtains a receiving time point of a data packet set to which the data packet belongs.

After a data connection session establishment or modification procedure is completed, when an application server needs to send service content data to the terminal device, the application server may first encode the data into service data such as a media frame or a media segment, and generate a data packet set corresponding to the media frame or the media segment. The application server sends the data packet set to the terminal device via the user plane function network element. The user plane function network element receives a data packet in the data packet set from the application server, and records a receiving time point of each data packet in the data packet set.

If delay budget information of the data packet is a delay offset of the data packet, S508A to S511A are performed; and if the delay budget information of the data packet is an available transmission delay budget of the data packet, S508B to S511B are performed.

S508A: The user plane function network element determines a delay offset of the data packet based on a receiving time point of the data packet and the receiving time point of the data packet set to which the data packet belongs.

The delay offset of the data packet indicates a difference between the receiving time point of the data packet and the receiving time point of the data packet set to which the data packet belongs.

In an example, if a receiving time point of a data packet A is 18^{th} ms, and a receiving time point of a data packet set to which the data packet A belongs is 16^{th} ms, the user plane function network element may determine that a delay offset of the data packet A is 2 ms.

S509A: The user plane function network element adds the delay offset to the data packet.

In some implementations, due to impact of a factor such as network jitter, a time point at which the data packet set arrives at the user plane function network element may be different from a user plane function network element reference receiving time point of the data packet set. In this embodiment of this application, before adding the delay offset to the data packet, the user plane function network element may further determine, based on the receiving time point of the data packet set to which the data packet belongs and a reference receiving time point of the data packet set to which the data packet belongs, a delay correction amount of the data packet set to which the data packet belongs, and correct the delay offset of the data packet based on the delay correction amount. For an implementation of how the user plane function network element determines the user plane function network element reference receiving time point of the data packet set, refer to the implementation in S408. Details are not described again.

In an example, a receiving time point, for the user plane function network element, of a data packet set to which a data packet A belongs is 16^{th} ms, but a user plane function network element reference receiving time point of the data packet set to which the data packet A belongs is 15^{th} ms. Therefore, the user plane function network element may determine, based on a difference between the 16^{th} ms and the 15^{th} ms, that a delay correction amount is 1 ms. The delay offset of the data packet determined by the user plane function network element may be corrected based on the delay correction amount. In an example, the delay offset before the correction is 2 ms, and a new delay offset obtained through the correction based on the delay correction amount 1 ms is 3 ms.

S510A: The user plane function network element sends the data packet to the access network device. Correspondingly, the access network device receives the data packet.

After determining the delay offset of the data packet and adding the delay offset to the data packet, the user plane function network element may map the data packet to a QoS flow corresponding to an SDF template to which the data packet belongs for transmission.

S511A: The access network device sends the data packet to the terminal device based on the delay offset of the data packet.

The access network device may determine an available transmission delay budget of the data packet based on the delay offset of the data packet and the delay budget of the data packet set, and send the data packet to the terminal device based on the available transmission delay budget. The available transmission delay budget of the data packet indicates a time period in which transmission of the data packet between the terminal device and the user plane function network element can be delayed (or may be delayed).

In an example, if the delay offset of the data packet is 2 ms, and the delay budget of the data packet set is 20 ms, it may be determined that the available transmission delay budget of the data packet is 18 ms.

Because a device environment (for example, a used wired line or wireless line) for data transmission between the access network device and the user plane function network element is usually fixed, a transmission delay between the access network device and the user plane function network element is usually fixed. In other words, a data packet transmission budget (CN-PDB for short) between the access network device and the user plane function network element is known. After determining the available transmission delay budget of the data packet, the access network device can determine a data packet transmission budget (AN-PDB for short) between the access network device and the terminal device by subtracting the CN-PDB from the available transmission delay budget of the data packet. The access network device can determine, based on the AN-PDB, a bandwidth resource, a modulation and coding scheme, and the like for sending the data packet to the terminal device.

It should be understood that the foregoing descriptions are provided by using an example in which the available transmission delay budget of the data packet is CN-PDB+AN-PDB. In some implementations, the available transmission delay budget of the data packet may alternatively be an AN-PDB. In this implementation, the access network device may further determine the AN-PDB based on the delay offset of the data packet, the delay budget of the data packet set, and the CN-PDB, and send the data packet to the terminal device based on the AN-PDB.

S508B: The user plane function network element determines an available transmission delay budget of the data packet based on the receiving time point of the data packet, the receiving time point of the data packet set to which the data packet belongs, and the delay budget of the data packet set. The available transmission delay budget of the data packet indicates a time period in which transmission of the data packet between the terminal device and the user plane function network element can be delayed (or may be delayed).

In an example, if a receiving time point of a data packet A is 18^{th} ms, a receiving time point of a data packet set to which the data packet A belongs is 16^{th} ms, and a delay budget of the data packet set is 20 ms, the user plane function network element may determine that an available transmission delay budget of the data packet A is 18 ms (that is, 20 ms - (18 ms - 16 ms)).

S509B: The user plane function network element adds the available transmission delay budget to the data packet.

In some implementations, due to impact of a factor such as network jitter, a time point at which the data packet set arrives at the user plane function network element may be different from a user plane function network element reference receiving time point of the data packet set. In this embodiment of this application, before adding the available transmission delay budget to the data packet, the user plane function network element may further determine, based on the receiving time point of the data packet set to which the data packet belongs and a reference receiving time point of the data packet set to which the data packet belongs, a delay correction amount of the data packet set to which the data packet belongs, and correct the available transmission delay budget of the data packet based on the delay correction amount. For an implementation of how the user plane function network element determines the user plane function network element reference receiving time point of the data packet set, refer to the implementation in S408. Details are not described again.

In an example, a receiving time point, for the user plane function network element, of a data packet set to which a data packet A belongs is 16^{th} ms, but a user plane function network element reference receiving time point of the data packet set to which the data packet A belongs is 15^{th} ms. Therefore, the user plane function network element may determine, based on a difference between the 16^{th} ms and the 15^{th} ms, that a delay correction amount is 1 ms. The available transmission delay budget of the data packet determined by the user plane function network element may be corrected based on the delay correction amount. In an example, the available transmission delay budget before the correction is 18 ms, and a new available transmission delay budget obtained through the correction based on the delay correction amount 1 ms is 17 ms.

S510B: The user plane function network element sends the data packet to the access network device. Correspondingly, the access network device receives the data packet.

After determining the available transmission delay budget of the data packet and adding the available transmission delay budget to the data packet, the user plane function network element may map the data packet to a QoS flow corresponding to an SDF template to which the data packet belongs for transmission.

S511B: The access network device sends the data packet to the terminal device based on the available transmission delay budget of the data packet.

Because a device environment (for example, a used wired line or wireless line) for data transmission between the access network device and the user plane function network element is usually fixed, a transmission delay between the access network device and the user plane function network element is usually fixed. In other words, a data packet transmission budget (CN-PDB for short) between the access network device and the user plane function network element is known. After determining the available transmission delay budget of the data packet, the access network device can determine a data packet transmission budget (AN-PDB for short) between the access network and the terminal device by subtracting the CN-PDB from the available transmission delay budget of the data packet. The access network device determines, based on the AN-PDB, a bandwidth resource, a modulation and coding scheme, and the like for sending the data packet to the terminal device.

It should be understood that the foregoing descriptions are provided by using an example in which the available transmission delay budget of the data packet is CN-PDB+AN-PDB. In some implementations, the available transmission delay budget of the data packet may alternatively be an AN-PDB. In this implementation, the user plane function network element may further determine the AN-PDB based on a difference between CN-PDB+AN-PDB and the CN-PDB, and add the AN-PDB as the available transmission delay budget of the data packet to the data packet. The access network device directly sends the data packet to the terminal device based on the AN-PDB.

In the communication method shown in FIG. 5, the user plane function network element side determines the delay budget information such as the available transmission delay budget or the delay offset of the data packet, and notifies the access network device side of the delay budget information. The access network device side performs corresponding transmission scheduling processing, for example, determines the bandwidth resource and the modulation and coding scheme for sending the data packet, to ensure that the data packet is sent to the terminal device side within the specified time. In some implementations, alternatively, the access network device side may determine an available transmission delay budget of a data packet in a data packet set based on parameters such as a delay budget of the data packet set and an access network device reference receiving time point of the data packet set, and during transmission scheduling processing, ensure that a corresponding data packet is sent to the terminal device side within specified time based on the information.

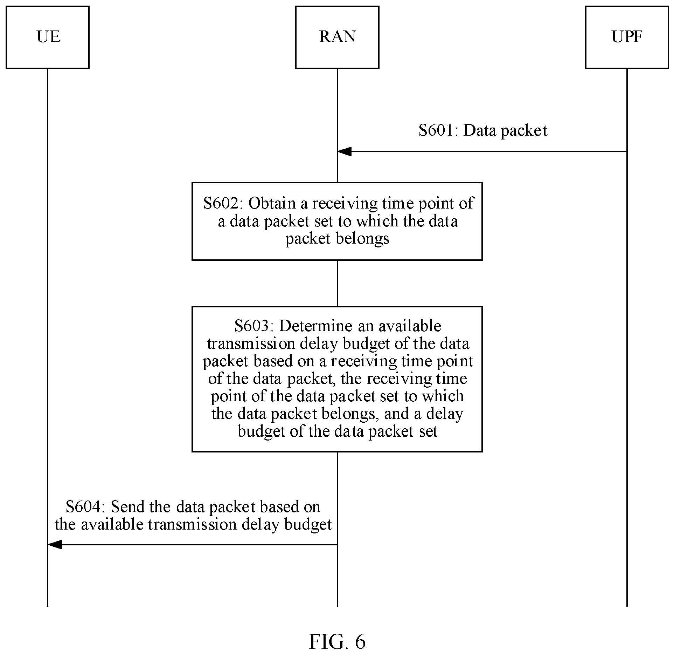

FIG. 6 is a fourth communication method according to an embodiment of this application. A terminal device, an access network device, and a user plane function network element are represented by UE, a RAN, and a UPF, respectively in FIG. 6. The method includes the following steps.

S601: A user plane function network element sends a data packet to an access network device. Correspondingly, the access network device receives the data packet from the user plane function network element.

S602: The access network device obtains a receiving time point of a data packet set to which the data packet belongs.

After a data connection session (for example, a PDU session) establishment or modification procedure is completed, and a QoS flow is established for a data connection session, for example, the QoS flow is established for the data connection session through S501 to S505 in FIG. 5, when an application server needs to send media content data to a terminal device, the application server may first encode the data into service data such as a media frame or a media segment, generate a data packet set corresponding to the media frame or the media segment, and send the data packet set to the user plane function network element. After receiving the data packet set, the user plane function network element may send the data packet set to the access network device. Specifically, the user plane function network element may map a data packet in the data packet set to the QoS flow, and send the QoS flow to the access network device.

The access network device receives the data packet in the data packet set from the user plane function network element, and records a receiving time point of each data packet in the data packet set.

S603: The access network device determines an available transmission delay budget of the data packet based on a receiving time point of the data packet, the receiving time point of the data packet set to which the data packet belongs, and a delay budget of the data packet set.

In an example, if a receiving time point of a data packet A is 26^{th} ms, a receiving time point of a data packet set to which the data packet A belongs is 24^{th} ms, and a delay budget of the data packet set is 20 ms, the access network device may determine that an available transmission delay budget of the data packet A is 18 ms (that is, 20 ms - (26 ms - 24 ms)).

In some implementations, due to impact of a factor such as network jitter, a time point at which the data packet set arrives at the access network device may be different from an access network device reference receiving time point of the data packet set. In this embodiment of this application, the access network device may further determine, based on the receiving time point of the data packet set to which the data packet belongs and an access network device reference receiving time point of the data packet set to which the data packet belongs, a delay correction amount of the data packet set to which the data packet belongs, and correct the available transmission delay budget of the data packet based on the delay correction amount.

In an example, a receiving time point, for the access network device, of a data packet set to which a data packet A belongs is 24^{th} ms, but an access network device reference receiving time point of the data packet set to which the data packet A belongs is 22^{nd} ms. Therefore, the access network device may determine, based on a difference between the 24^{th} ms and the 22^{nd} ms, that a delay correction amount is 2 ms. The determined available transmission delay budget of the data packet may be corrected based on the delay correction amount. In an example, the available transmission delay budget before the correction is 18 ms, and a new available transmission delay budget obtained through the correction based on the delay correction amount 2 ms is 16 ms.

In some implementations, the access network device may determine, based on the data packet set transmission interval and the access network device reference receiving time point that is of the X^{th} data packet set corresponding to the SDF template in the data connection session and that is from a session management function network element, the access network device reference receiving time point of the data packet set to which the data packet belongs, where X is a positive integer.

In some other implementations, the access network device may further determine, based on receiving time points of a plurality of consecutive data packet sets that have been received and that correspond to the SDF template in the data connection session, the access network device reference receiving time point of the data packet set to which the data packet belongs.

For an implementation in which the access network device determines, based on the foregoing information, the access network device reference receiving time point of the data packet set to which the data packet belongs, refer to the foregoing implementation in which the user plane function network element determines the user plane function network element reference receiving time point of the data packet set to which the data packet belongs in FIG. 4. Details are not described again.

S604: The access network device sends the data packet to the terminal device based on the available transmission delay budget.

Specifically, because a device environment (for example, a used wired line or wireless line) for data transmission between the access network device and the user plane function network element is usually fixed, a transmission delay between the access network device and the user plane function network element is usually fixed. In other words, a data packet transmission budget (CN-PDB for short) between the access network device and the user plane function network element is known. After determining the available transmission delay budget of the data packet, the access network device can determine a data packet transmission budget (AN-PDB for short) between the access network and the terminal device by subtracting the CN-PDB from the available transmission delay budget of the data packet. The access network device can determine, based on the AN-PDB, a bandwidth resource, a modulation and coding scheme, and the like for sending the data packet to the terminal device.

It should be understood that the foregoing descriptions are provided by using an example in which the available transmission delay budget of the data packet is CN-PDB+AN-PDB. In some implementations, the available transmission delay budget of the data packet may alternatively be an AN-PDB. In this implementation, after determining the AN-PDB, the access network device may directly send the data packet to the terminal device based on the AN-PDB.

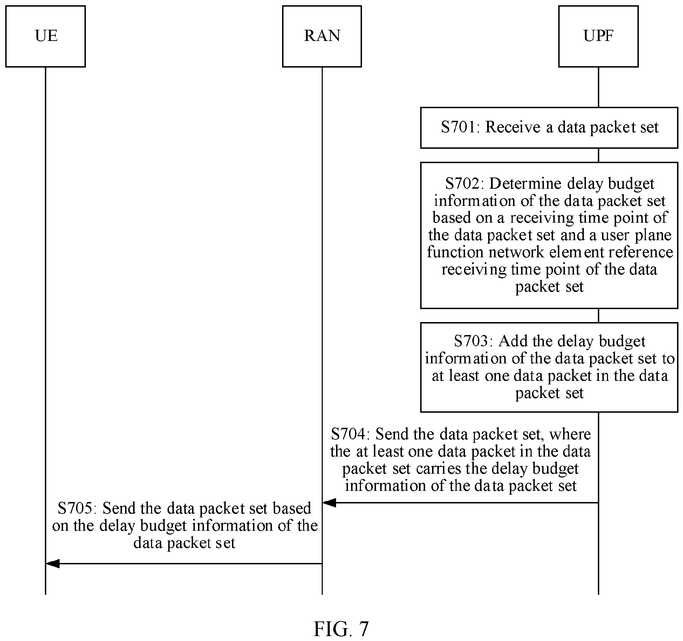

In FIG. 3 to FIG. 6, a delay requirement of a data packet set is mainly guaranteed based on a data packet granularity. In some implementations, the delay requirement of the data packet set may alternatively be guaranteed based on a data packet set granularity. FIG. 7 is a schematic 5 of a communication method according to an embodiment of this application. A terminal device, an access network device, and a user plane function network element are represented by UE, a RAN, and a UPF, respectively in FIG. 7. The method includes the following steps.

S701: A user plane function network element receives a data packet set.

In some implementations, when a service of a terminal device is enabled (for example, when an application corresponding to the service is enabled), the terminal device may be triggered to request to establish a data connection session (for example, a PDU session, for example, sending a PDU session establishment request to a session management function network element). The session management function network element establishes a GTP-U tunnel between an access network device accessed by the terminal device and the user plane function network element for a data connection session (for example, a PDU session). The GTP-U tunnel may be for transmitting service data sent to the terminal device and service data sent by the terminal device.

When an application server needs to send service data such as media content to the terminal device, after encoding the media content into a media frame or a media segment, the application server generates a data packet set corresponding to the media frame or the media segment, and sends the data packet set to the terminal device. The data packet set first arrives at the user plane function network element, and the user plane function network element receives the data packet set from the application server.

The user plane function network element may determine a correspondence between a data packet set and a data packet in the data packet set by using an M field, a timestamp, an RTP header extension field, or the like of an RTP header. For details, refer to descriptions of S301 and S302. Details are not described again.

S702: The user plane function network element determines delay budget information of the data packet set based on a receiving time point of the data packet set and a user plane function network element reference receiving time point of the data packet set.

S703: The user plane function network element adds the delay budget information of the data packet set to at least one data packet in the data packet set.

S704: The user plane function network element sends the data packet set to the access network device. Correspondingly, the access network device receives the data packet set. The at least one data packet in the data packet set carries the delay budget information of the data packet set.

S705: The access network device sends the data packet set to the terminal device based on the delay budget information of the data packet set.

In this embodiment of this application, the user plane function network element may determine the delay budget information of the data packet set based on the receiving time point of the data packet set and the user plane function network element reference receiving time point of the data packet set, and may add the delay budget information of the data packet set to the at least one data packet in the data packet set, and then send the data packet set. For example, the data packet set may be sent after delay budget information of the data packet set is added to a GTP-U header of a 1^{st} data packet in the data packet set, or the data packet set may be sent after the delay budget information of the data packet set is added to GTP-U headers of first N, last N, or all data packets in the data packet set.

The delay budget information of the data packet set may be a delay correction amount of the data packet set, an available transmission delay budget of the data packet set, identification information of a target QoS flow for transmitting the data packet set in a plurality of QoS flows corresponding to a data connection session to which the data packet set belongs, or the like. After receiving the data packet set, the access network device may perform transmission scheduling processing based on the delay budget information of the data packet set, for example, determining, based on the delay budget information of the data packet set, a bandwidth resource, a modulation and coding scheme, and the like for sending the data packet set to the terminal device, to meet a delay requirement of the data packet set.

The following provides descriptions with reference to specific delay budget information of a data packet set.

Implementation B1: The delay budget information of the data packet set is identification information of a target QoS flow for transmitting the data packet set, and the target QoS flow is any one of a plurality of QoS flows corresponding to a data connection session.

In implementation B1, a policy control function network element may establish a plurality of QoS flows for a data connection session based on a QoS requirement of a data packet set granularity. Each of the plurality of QoS flows corresponds to a different delay correction amount, or each of the plurality of QoS flows corresponds to a different delay budget. All of the plurality of QoS flows may be for transmitting a data packet set, to provide service guarantee for the data packet set. The following provides descriptions with reference to a specific example.

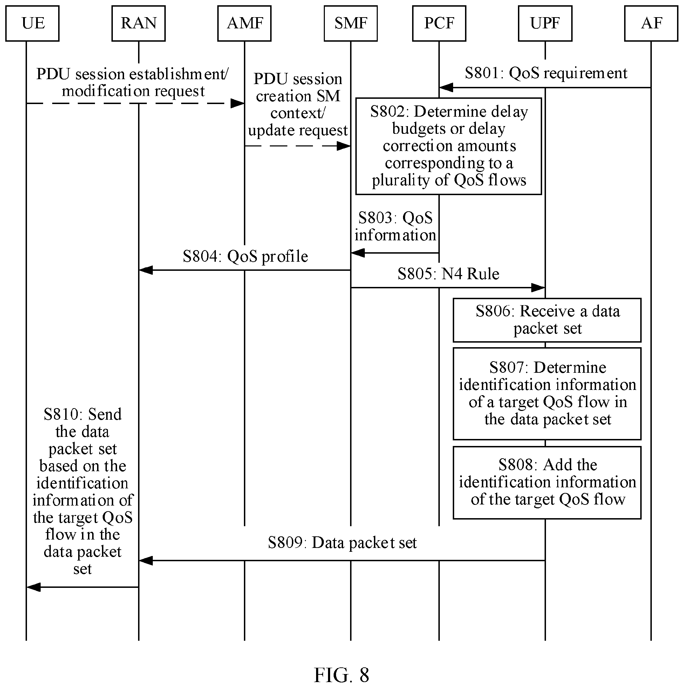

FIG. 8 is a schematic 6 of a communication method according to an embodiment of this application. Different from the communication method shown in FIG. 4 in which the delay requirement is guaranteed by using a data packet as a granularity and data packets in a data packet set may be transmitted in different QoS flows, in the communication method shown in FIG. 8, a delay requirement is guaranteed by using a data packet set as a granularity and all data packets in a data packet set are transmitted in one QoS flow. A terminal device, an access network device, a user plane function network element, an access and mobility management function network element, a session management function network element, a policy control function network element, and an application function network element are represented by UE, a RAN, a UPF, an AMF, an SMF, a PCF, and an AF, respectively in FIG. 8. The method includes the following steps.

S801: An application function network element sends a QoS requirement to a policy control function network element. Correspondingly, the policy control function network element receives the QoS requirement.

The QoS requirement includes a delay budget of a data packet set in a data connection session.

S802: The policy control function network element determines, based on the QoS requirement, a delay budget or a delay correction amount corresponding to each of a plurality of QoS flows of the data connection session. Each of the plurality of QoS flows corresponds to a different delay correction amount or a different delay offset.

S803: The policy control function network element sends QoS information to a session management function network element. Correspondingly, the session management function network element receives the QoS information, where the QoS information includes the delay budget or the delay correction amount corresponding to each of the plurality of QoS flows of the data connection session.

S804: The session management function network element sends a QoS profile to an access network device. Correspondingly, the access network device receives the QoS profile.

The QoS profile includes the delay budget corresponding to each of the plurality of QoS flows or the delay correction amount corresponding to each of the plurality of QoS flows.

S805: The session management function network element sends an N4 rule to a user plane function network element. Correspondingly, the user plane function network element receives the N4 rule.

The N4 rule includes a QoS parameter. Specifically, the QoS parameter may include the delay budget corresponding to each of the plurality of QoS flows or the delay correction amount corresponding to each of the plurality of QoS flows.

In this embodiment of this application, for a meaning of the delay budget corresponding to the QoS flow, refer to the meaning descriptions of the delay budget corresponding to the QoS flow in S402. Details are not described again. The delay correction amount corresponding to the QoS flow is similar to the delay offset corresponding to the QoS flow, and may indicate a difference between the delay budget of the data packet set in the data connection session included in the QoS requirement and the delay budget corresponding to the QoS flow. Therefore, in this embodiment of this application, for implementation of S801 to S805, refer to implementation of S401 to S405. Details are not described again.

S806: The user plane function network element receives a data packet set.

S807: The user plane function network element determines identification information of a target QoS flow in the data packet set based on a receiving time point of the data packet set and a user plane function network element reference receiving time point of the data packet set.

After a data connection session establishment or modification procedure is completed, when an application server needs to send service data such as media content to a terminal device, the application server may encode the media content into a media frame or a media segment, generate a data packet set corresponding to the media frame or the media segment, and send the data packet set to the terminal device via the user plane function network element. The data packet set first arrives at the user plane function network element, and correspondingly, the user plane function network element receives the data packet set.

In a possible implementation, if the data connection session corresponds to a plurality of QoS flows, and each of the plurality of QoS flows corresponds to a different delay correction amount, the user plane function network element may determine a delay correction amount of the data packet set based on the receiving time point of the data packet set and the user plane function network element reference receiving time point of the data packet set, and determine the identification information of the target QoS flow based on the delay correction amount of the data packet set and the delay correction amount corresponding to each of the plurality of QoS flows.

In an example, the data connection session corresponds to two QoS flows: a QoS flow 1 and a QoS flow 2. A delay correction amount corresponding to the QoS flow 1 is 0 ms, and an applicable delay correction amount range is less than or equal to 0 ms. A delay correction amount corresponding to the QoS flow 2 is 5 ms, and an applicable delay correction amount range is greater than 0 ms and less than or equal to 5 ms. A receiving time point, for the access network device, of a data packet set A is 16^{th} ms, but a user plane function network element reference receiving time point of the data packet set A is 15^{th} ms. Therefore, the user plane function network element may determine that a delay correction amount is 1 ms. 2 ms is within the range greater than 0 ms and less than or equal to 5 ms. Therefore, it may be determined that the target QoS flow is the QoS flow 2, and it may be determined that the identification information of the target QoS flow is identification information of the QoS flow 2, for example, a 5QI of the QoS flow 2.

In another possible implementation, if the data connection session corresponds to a plurality of QoS flows, and each of the plurality of QoS flows corresponds to a different delay budget, the user plane function network element may determine an available transmission delay budget of the data packet set based on the receiving time point of the data packet set, the reference receiving time point of the data packet set, and a delay budget of the data packet set; and determine the identification information of the target QoS flow based on the available transmission delay budget of the data packet set and the delay budget corresponding to each of the plurality of QoS flows.

In an example, the data connection session corresponds to two QoS flows: a QoS flow 1 and a QoS flow 2. A delay budget corresponding to the QoS flow 1 is 20 ms, which can meet a transmission requirement of a data packet whose available transmission delay budget is greater than 20 ms, and an applicable available transmission delay budget range is greater than or equal to 20 ms. A delay budget corresponding to the QoS flow 2 is 15 ms, which can meet a transmission requirement of a data packet whose available transmission delay budget is greater than or equal to 15 ms and less than 20 ms, and an applicable available transmission delay budget range is less than 20 ms and greater than or equal to 15 ms. If a receiving time point, for the user plane function network element, of a data packet set A is 16^{th} ms, but a user plane function network element reference receiving time point of the data packet set A is 15^{th} ms, the user plane function network element may determine that an available transmission delay budget of the data packet set A is 19 ms (that is, 20 ms - (16 ms - 15 ms)). 19 ms is within the range less than 20 ms and greater than or equal to 15 ms. Therefore, it may be determined that the target QoS flow is the QoS flow 2, and it may be determined that the identification information of the target QoS flow is identification information of the QoS flow 2, for example, a 5QI of the QoS flow 2.

S808: The user plane function network element adds the identification information of the target QoS flow to at least one data packet in the data packet set.

S809: The user plane function network element sends the data packet set to the access network device. Correspondingly, the access network device receives the data packet set.

After determining the identification information of the target QoS flow in the data packet set, and adding the identification information of the target QoS flow to the at least one data packet in the data packet set, the user plane function network element may map, based on the identification information of the target QoS flow, the data packet set to a QoS flow that is in the plurality of QoS flows and that matches the identification information of the target QoS flow for transmission.

S810: The access network device sends the data packet set to the terminal device based on the identification information of the target QoS flow in the data packet set.

In a possible implementation, if the data connection session corresponds to a plurality of QoS flows, and each of the plurality of QoS flows corresponds to a different delay correction amount, the access network device may determine the available transmission delay budget of the data packet set based on a delay correction amount corresponding to the target QoS flow and the delay budget of the data packet set, and send the data packet set to the terminal device based on the available transmission delay budget, that is, send a data packet in the data packet set to the terminal device.

In another possible implementation, if the data connection session corresponds to a plurality of QoS flows, and each of the plurality of QoS flows corresponds to a different delay budget, the access network device may send the data packet set to the terminal device based on a delay budget corresponding to the target QoS flow, that is, send a data packet in the data packet set to the terminal device.

Specifically, because a device environment (for example, a used wired line or wireless line) for data transmission between the access network device and the user plane function network element is usually fixed, a transmission delay between the access network device and the user plane function network element is usually fixed. In other words, a data packet transmission budget (CN-PDB for short) between the access network device and the user plane function network element is known. After determining the available transmission delay budget of the data packet set or the delay budget corresponding to the data packet set, the access network device can determine a data packet set transmission budget between the access network and the terminal device by subtracting the CN-PDB from the available transmission delay budget of the data packet set or the delay budget corresponding to the data packet set. The access network device can determine, based on the data packet set transmission budget between the access network and the terminal device, a bandwidth resource, a modulation and coding scheme, and the like for sending the data packet set to the terminal device.

According to the foregoing implementation B1, all the data packets in the data packet set can be sent to the terminal device within a delay budget at a data packet set granularity, to meet a delay requirement of the data packet set granularity.

In addition, it should be understood that the data packet set transmission budget, the delay requirement of the data packet set, and the like may also be understood as a transmission budget of a data packet in the data packet set, and a delay requirement of a data packet in the data packet set. The two types of terms can be used exchangeably.

Implementation B2: The delay budget information of the data packet set is a delay correction amount of the data packet set or an available transmission delay budget of the data packet set.

In implementation B2, a user plane function network element may determine a delay correction amount of a data packet set or an available transmission delay budget of the data packet set based on a receiving time point of the data packet set and a user plane function network element reference receiving time point of the data packet set, and notify an access network device of the delay correction amount or the available transmission delay budget. The access network device determines a sending policy of the data packet set based on the delay correction amount of a data packet set or the available transmission delay budget of the data packet set, to meet a delay requirement for sending a data packet in the data packet set.

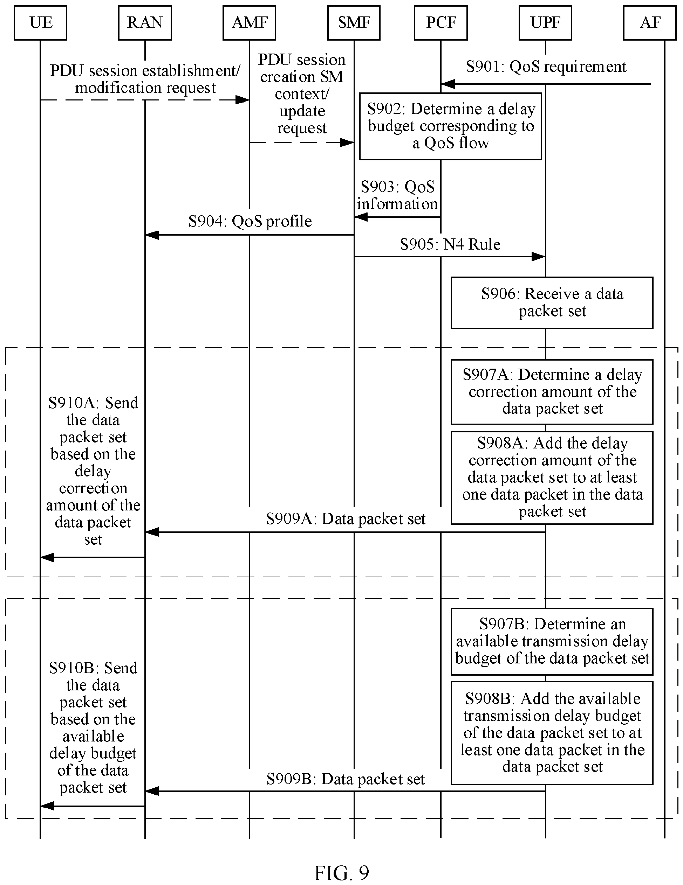

FIG. 9 is a schematic 7 of a communication method according to an embodiment of this application. Different from the communication method shown in FIG. 4 in which the delay requirement is guaranteed by using a data packet as a granularity and the user plane function network element adds the available transmission delay or the delay offset to each data packet in the data packet set to guarantee the delay requirement, in the communication method shown in FIG. 9, a delay requirement is guaranteed by using a data packet set as a granularity and a user plane function network element adds an available transmission delay or a delay correction amount to a data packet set as a whole to guarantee the delay requirement. A terminal device, an access network device, a user plane function network element, an access and mobility management function network element, a session management function network element, a policy control function network element, and an application function network element are represented by UE, a RAN, a UPF, an AMF, an SMF, a PCF, and an AF, respectively in FIG. 9. The method includes the following steps.

S901: An application function network element sends a QoS requirement to a policy control function network element. Correspondingly, the policy control function network element receives the QoS requirement, where the QoS requirement includes a delay budget of a data packet set in a data connection session.

S902: The policy control function network element determines, based on the QoS requirement, a delay budget corresponding to a QoS flow of the data connection session.

S903: The policy control function network element sends QoS information to a session management function network element. Correspondingly, the session management function network element receives the QoS information.

S904: The session management function network element sends a QoS profile to an access network device. Correspondingly, the access network device receives the QoS profile.

S905: The session management function network element sends an N4 rule to a user plane function network element. Correspondingly, the user plane function network element receives the N4 rule.

For implementation of S901 to S905, refer to implementation of S501 to S505. Details are not described again.

S906: A user plane function network element receives a data packet set.

After a data connection session establishment or modification procedure is completed, when an application server needs to send media content data to a terminal device, the application server may first encode the data into service data such as a media frame or a media segment, generate a data packet set corresponding to the media frame or the media segment, and send the data packet set to the terminal device side. Then, the data packet set arrives at the user plane function network element. The user plane function network element receives the data packet set from the application server.

If delay budget information of the data packet set is a delay correction amount of the data packet set, S907A to S910A are performed; and if the delay budget information of the data packet set is an available transmission delay budget of the data packet set, S907B to S910B are performed.

S907A: The user plane function network element determines a delay correction amount of the data packet set based on a receiving time point of the data packet set and a user plane function network element reference receiving time point of the data packet set.

The delay correction amount indicates a difference between the receiving time point of the data packet set and the user plane function network element reference receiving time point of the data packet set.

In an example, if a receiving time point, for the user plane function network element, of a data packet set A is 16^{th} ms, but a user plane function network element reference receiving time point of the data packet set A is 15^{th} ms, it may be determined that a delay correction amount is 1 ms.

S908A: The user plane function network element adds the delay correction amount of the data packet set to at least one data packet in the data packet set.

S909A: The user plane function network element sends the data packet set to the access network device. Correspondingly, the access network device receives the data packet set.

After adding the delay correction amount of the data packet set to the at least one data packet in the data packet set, the user plane function network element may map the data packet to a QoS flow corresponding to an SDF template to which the data packet set belongs for transmission.

S910A: The access network device sends the data packet set to the terminal device based on the delay correction amount of the data packet set.

The access network device may determine an available transmission delay budget of the data packet set based on the delay correction amount of the data packet set and the delay budget of the data packet set, and send the data packet set to the terminal device based on the available transmission delay budget. The available transmission delay budget of the data packet set indicates a time period in which transmission of the data packet set between the terminal device and the user plane function network element can be delayed (or may be delayed).

In an example, if the delay correction amount of the data packet set is 2 ms, and the delay budget of the data packet set is 20 ms, it may be determined that the available transmission delay budget of the data packet set is 18 ms.

Because a device environment (for example, a used wired line or wireless line) for data transmission between the access network device and the user plane function network element is usually fixed, a transmission delay between the access network device and the user plane function network element is usually fixed. In other words, a data packet or data packet set transmission budget (CN-PDB for short) between the access network device and the user plane function network element is known. After determining the available transmission delay budget of the data packet set, the access network device can determine a data packet set transmission budget between the access network and the terminal device by subtracting the CN-PDB from the available transmission delay budget of the data packet set. The access network device may determine, based on the data packet set transmission budget between the access network and the terminal device, a bandwidth resource, a modulation and coding scheme, and the like for sending the data packet set to the terminal device.

S907B: The user plane function network element determines an available transmission delay budget of the data packet set based on a receiving time point of the data packet set and a user plane function network element reference receiving time point of the data packet set.

In an example, if a receiving time point, for the user plane function network element, of a data packet set A is 16^{th} ms, but a user plane function network element reference receiving time point of the data packet set A is 15^{th} ms, the user plane function network element may determine that an available transmission delay budget of the data packet set A is 19 ms (that is, 20 ms - (16 ms - 15 ms)).

S908B: The user plane function network element adds the available transmission delay budget of the data packet set to at least one data packet in the data packet set.

S909B: The user plane function network element sends the data packet set to the access network device. Correspondingly, the access network device receives the data packet set.

After determining the available transmission delay budget of the data packet set and adding the available transmission delay budget to the at least one data packet in the data packet set, the user plane function network element may map the data packet set to a QoS flow corresponding to an SDF template to which the data packet set belongs for transmission.

S910B: The access network device sends the data packet set to the terminal device based on the available transmission delay budget of the data packet set.

Specifically, because a device environment (for example, a used wired line or wireless line) for data transmission between the access network device and the user plane function network element is usually fixed, a transmission delay between the access network device and the user plane function network element is usually fixed. In other words, the data packet or data packet set transmission budget (CN-PDB for short) between the access network device and the user plane function network element is known. After determining the available transmission delay budget of the data packet set, the access network device can determine a data packet set transmission budget between the access network and the terminal device by subtracting the CN-PDB from the available transmission delay budget of the data packet set. The access network device can determine, based on the data packet set transmission budget between the access network and the terminal device, a bandwidth resource, a modulation and coding scheme, and the like for sending the data packet set to the terminal device.

In some implementations, alternatively, the access network device side may determine an available transmission delay budget of a data packet set based on parameters such as a delay budget of the data packet set and an access network device reference receiving time point of the data packet set, and during transmission scheduling and optimization processing, ensure that a corresponding data packet set is sent to the terminal device side within specified time based on the information.

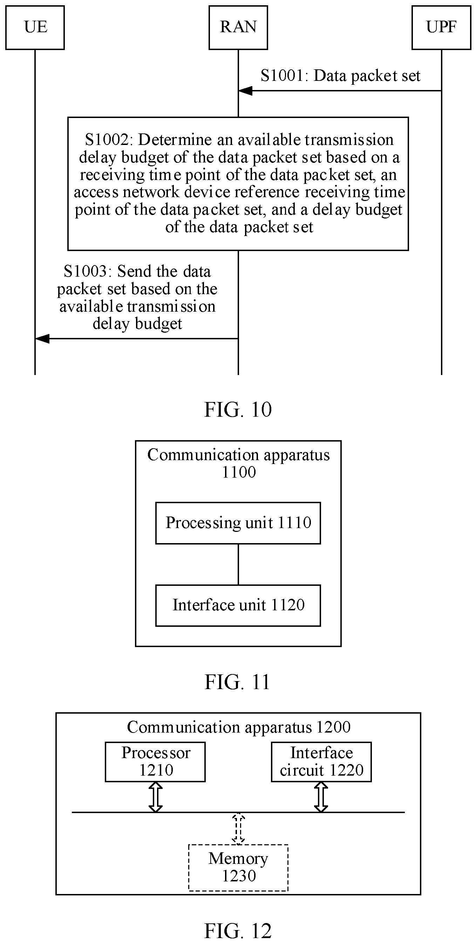

FIG. 10 shows an eighth communication method according to an embodiment of this application. Different from the communication method shown in FIG. 5 in which the delay requirement is guaranteed by using a data packet as a granularity and the access network device determines the available transmission delay for each data packet in the data packet set to guarantee the delay requirement, in the communication method shown in FIG. 10, a delay requirement is guaranteed by using a data packet set as a granularity, and an access network device determines an available transmission delay for a data packet set as a whole to guarantee the delay requirement. A terminal device, an access network device, and a user plane function network element are represented by UE, a RAN, and a UPF, respectively in FIG. 10. The method includes the following steps.

S1001: A user plane function network element sends a data packet set to an access network device. The access network device receives the data packet set from the user plane function network element.

After a data connection session (for example, a PDU session) establishment or modification procedure is completed, and a QoS flow is established for a data connection session, for example, the QoS flow is established for the data connection session through S501 to S505 in FIG. 5, when an application server needs to send media content data to a terminal device, the application server may first encode the data into service data such as a media frame or a media segment, generate a data packet set corresponding to the media frame or the media segment, and send the data packet set to the terminal device side. Then, the data packet set arrives at the user plane function network element. After receiving the data packet set, the user plane function network element may map the data packet set to a QoS flow and send the QoS flow to the access network device.

S1002: The access network device determines an available transmission delay budget of the data packet set based on a receiving time point of the data packet set, an access network device reference receiving time point of the data packet set, and a delay budget of the data packet set.

In an example, if a receiving time point, for the access network device, of a data packet set A is 26^{th} ms, an access network device reference receiving time point of the data packet set A is 24^{th} ms, and a delay budget of the data packet set is 20 ms, the access network device may determine that an available transmission delay budget of the data packet set A is 18 ms (that is, 20 ms - (26 ms - 24 ms)).

For an implementation in which the access network device determines the access network device reference receiving time point of the data packet set, refer to the foregoing implementation in which the access network device determines the access network device reference receiving time point of the data packet set in FIG. 6. Details are not described again.

S 1003: The access network device sends the data packet set to a terminal device based on the available transmission delay budget.

Specifically, because a device environment (for example, a used wired line or wireless line) for data transmission between the access network device and the user plane function network element is usually fixed, a transmission delay between the access network device and the user plane function network element is usually fixed. In other words, a data packet or data packet set transmission budget (CN-PDB for short) between the access network device and the user plane function network element is known. After determining the available transmission delay budget of the data packet set, the access network device can determine a data packet set transmission budget between the access network and the terminal device by subtracting the CN-PDB from the available transmission delay budget of the data packet set. The access network device can determine, based on the data packet set transmission budget between the access network and the terminal device, a bandwidth resource, a modulation and coding scheme, and the like for sending the data packet set to the terminal device.

It should be understood that the foregoing available transmission delay budget is described by using a sum of the CN-PDB and the data packet set transmission budget between the access network and the terminal device as an example. It may be understood that, the data packet set transmission budget between the access network and the terminal device may alternatively be directly used as the available transmission delay budget of the data packet set.

It may be understood that, to implement functions in the foregoing embodiments, the user plane function network element, the policy control function network element, and the access network device include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

FIG. 11 and FIG. 12 each are a schematic of a possible structure of a communication apparatus according to an embodiment of this application. These communication apparatuses may be configured to implement functions of the user plane function network element, the policy control function network element, or the access network device in the foregoing method embodiments, and therefore can also implement beneficial effects of the foregoing method embodiments. In a possible implementation, the communication apparatus may be a user plane function network element, a policy control function network element, or an access network device, or may be a module (for example, a chip) used in the user plane function network element, the policy control function network element, or the access network device.

As shown in FIG. 11, the communication apparatus 1100 includes a processing unit 1110 and an interface unit 1120. The interface unit 1120 may alternatively be a transceiver unit or an input/output interface. The communication apparatus 1100 may be configured to implement functions of the user plane function network element, the policy control function network element, or the access network device in the method embodiments shown in FIG. 3 to FIG. 10.

When the communication apparatus 1100 is configured to implement the functions of the user plane function network element in the method embodiments shown in FIG. 3 to FIG. 6:
The interface unit 1120 is configured to receive a data packet. The processing unit 1110 is configured to: obtain a receiving time point of a data packet set to which the data packet belongs; determine delay budget information of the data packet based on a receiving time point of the data packet and the receiving time point of the belonging data packet set; and add the delay budget information of the data packet to the data packet.

In a possible design, the delay budget information of the data packet is a delay offset of the data packet, and the delay offset of the data packet indicates a difference between the receiving time point of the data packet and the receiving time point of the belonging data packet set.

In a possible design, the delay budget information of the data packet is an available transmission delay budget of the data packet. When determining the delay budget information of the data packet based on the receiving time point of the data packet and the receiving time point of the belonging data packet set, the processing unit 1110 is specifically configured to determine an available transmission delay budget of the data packet based on a receiving time point of the data packet, the receiving time point of the belonging data packet set, and a delay budget of the data packet set.

In a possible design, a data connection session for transmitting the data packet corresponds to a plurality of QoS flows, each of the plurality of QoS flows corresponds to a different delay offset, the delay budget information of the data packet is identification information of a target QoS flow, and the target QoS flow is one of the plurality of QoS flows. When determining the delay budget information of the data packet based on the receiving time point of the data packet and the receiving time point of the belonging data packet set, the processing unit 1110 is specifically configured to: determine a delay offset of the data packet based on the receiving time point of the data packet and the receiving time point of the belonging data packet set; and determine the identification information of the target QoS flow based on the delay offset of the data packet and the delay offset corresponding to each of the plurality of QoS flows.

In a possible design, a data connection session for transmitting the data packet corresponds to a plurality of QoS flows, each of the plurality of QoS flows corresponds to a different delay budget, the delay budget information of the data packet is identification information of a target QoS flow, and the target QoS flow is one of the plurality of QoS flows. When determining the delay budget information of the data packet based on the receiving time point of the data packet and the receiving time point of the belonging data packet set, the processing unit 1110 is specifically configured to: determine an available transmission delay budget of the data packet based on the receiving time point of the data packet, the receiving time point of the belonging data packet set, and a delay budget of the data packet set; and determine the identification information of the target QoS flow based on the available transmission delay budget and the delay budget corresponding to each of the plurality of QoS flows.

In a possible design, the interface unit 1120 is further configured to receive a QoS parameter from a session management function network element, where the QoS parameter includes the delay offset corresponding to each of the plurality of QoS flows.

In a possible design, the interface unit 1120 is further configured to receive a QoS parameter from a session management function network element, where the QoS parameter includes the delay budget corresponding to each of the plurality of QoS flows.

In a possible design, the processing unit 1110 is further configured to: determine a delay correction amount of the belonging data packet set based on the receiving time point of the belonging data packet set and a user plane function network element reference receiving time point of the belonging data packet set; and correct the delay budget information of the data packet based on the delay correction amount.

In a possible design, the interface unit 1120 is further configured to receive data packet set information from the session management function network element, where the data packet set information includes a data packet set transmission interval and a user plane function network element reference receiving time point of an X^{th} data packet set in the data connection session for transmitting the data packet, where X is a positive integer. The processing unit 1110 is further configured to determine the user plane function network element reference receiving time point of the belonging data packet set based on the user plane function network element reference receiving time point of the X^{th} data packet set and the data packet set transmission interval.

In a possible design, the processing unit 1110 is further configured to determine the user plane function network element reference receiving time point of the belonging data packet set based on receiving time points of a plurality of consecutive data packet sets that have been received in the data connection session for transmitting the data packet.

When the communication apparatus 1100 is configured to implement the functions of the policy control function network element in the method embodiments shown in FIG. 3 to FIG. 6:
The interface unit 1120 is configured to receive a quality of service QoS requirement from an application function network element, where the QoS requirement includes a delay budget of a data packet set in a data connection session. The processing unit 1110 is configured to determine, based on the QoS requirement, a delay budget or a delay offset corresponding to each of a plurality of QoS flows of the data connection session, where each of the plurality of QoS flows corresponds to a different delay budget or each of the plurality of QoS flows corresponds to a different delay offset. The interface unit 1120 is further configured to send QoS information to a session management function network element, where the QoS information includes the delay budget or the delay offset corresponding to each of the plurality of QoS flows.

In a possible design, the delay budget corresponding to each of the plurality of QoS flows is less than or equal to the delay budget of the data packet set, and the delay offset corresponding to each of the plurality of QoS flows is less than the delay budget of the data packet set.

When the communication apparatus 1100 is configured to implement the functions of the access network device in the method embodiments shown in FIG. 3 to FIG. 6:
In some implementations, the interface unit 1120 is configured to receive a data packet from a user plane function network element, where the data packet carries delay budget information of the data packet. The processing unit 1110 is configured to send the data packet to a terminal device based on the delay budget information of the data packet via the interface unit 1120.

In a possible design, the delay budget information of the data packet is a delay offset of the data packet. When sending the data packet to the terminal device based on the delay budget information of the data packet via the interface unit 1120, the processing unit 1110 is specifically configured to: determine an available transmission delay budget of the data packet based on the delay offset and the delay budget of the data packet set; and send the data packet to the terminal device based on the available transmission delay budget via the interface unit 1120.

In a possible design, the delay budget information of the data packet is an available transmission delay budget of the data packet.

In a possible design, a data connection session for transmitting the data packet corresponds to a plurality of QoS flows, each of the plurality of QoS flows corresponds to a different delay offset, the delay budget information of the data packet is identification information of a target QoS flow, and the target QoS flow is one of the plurality of QoS flows. When sending the data packet to the terminal device based on the delay budget information of the data packet via the interface unit 1120, the processing unit 1110 is specifically configured to: determine an available transmission delay budget of the data packet based on a delay offset corresponding to the target QoS flow and a delay budget of a data packet set; and send the data packet to the terminal device based on the available transmission delay budget via the interface unit 1120.

In a possible design, a data connection session for transmitting the data packet corresponds to a plurality of QoS flows, each of the plurality of QoS flows corresponds to a different delay budget, the delay budget information of the data packet is identification information of a target QoS flow, and the target QoS flow is one of the plurality of QoS flows. When sending the data packet to the terminal device based on the delay budget information of the data packet via the interface unit 1120, the processing unit 1110 is specifically configured to send, via the interface unit 1120, the data packet to the terminal device based on a delay budget corresponding to the target QoS flow.

In some other implementations, the interface unit 1120 is configured to receive a data packet from a user plane function network element. The processing unit 1110 is configured to: obtain a receiving time point of a data packet set to which the data packet belongs; determine an available transmission delay budget of the data packet based on a receiving time point of the data packet, the receiving time point of the belonging data packet set, and a delay budget of the data packet set; and send the data packet to the terminal device based on the available transmission delay budget via the interface unit 1120.

In a possible design, the processing unit 1110 is further configured to: determine a delay correction amount of the belonging data packet set based on the receiving time point of the belonging data packet set and an access network device reference receiving time point of the belonging data packet set; and correct the available transmission delay budget of the data packet based on the delay correction amount.

In a possible design, the interface unit 1120 is further configured to receive data packet set information from a session management function network element, where the data packet set information includes a data packet set transmission interval and an access network device reference receiving time point of an X^{th} data packet set in a data connection session for transmitting the data packet, where X is a positive integer. The processing unit 1110 is further configured to determine the access network device reference receiving time point of the belonging data packet set based on the access network device reference receiving time point of the X^{th} data packet set and the data packet set transmission interval.

In a possible design, the processing unit 1110 is further configured to determine, based on receiving time points of a plurality of consecutive data packet sets that have been received in a data connection session for transmitting the data packet, the access network device reference receiving time point of the belonging data packet set.

When the communication apparatus 1100 is configured to implement the functions of the user plane function network element in the method embodiments shown in FIG. 7 to FIG. 10:
The interface unit 1120 is configured to receive a data packet set. The processing unit 1110 is configured to: determine delay budget information of the data packet set based on a receiving time point of the data packet set and a user plane function network element reference receiving time point of the data packet set; and add the delay budget information of the data packet set to at least one data packet in the data packet set.

In a possible design, the delay budget information of the data packet set is a delay correction amount of the data packet set, and the delay correction amount indicates a difference between the receiving time point of the data packet set and the user plane function network element reference receiving time point of the data packet set.

In a possible design, the delay budget information of the data packet set is an available transmission delay budget of the data packet set. When determining the delay budget information of the data packet set based on the receiving time point of the data packet set and the user plane function network element reference receiving time point of the data packet set, the processing unit 1110 is specifically configured to determine the available transmission delay budget of the data packet set based on the receiving time point of the data packet set, the user plane function network element reference receiving time point of the data packet set, and a delay budget of the data packet set.

In a possible design, a data connection session for transmitting the data packet set corresponds to a plurality of QoS flows, each of the plurality of QoS flows corresponds to a different delay correction amount, the delay budget information of the data packet set is identification information of a target QoS flow, and the target QoS flow is one of the plurality of QoS flows. When determining the delay budget information of the data packet set based on the receiving time point of the data packet set and the user plane function network element reference receiving time point of the data packet set, the processing unit 1110 is specifically configured to: determine a delay correction amount of the data packet set based on the receiving time point of the data packet set and the user plane function network element reference receiving time point of the data packet set; and determine the identification information of the target QoS flow based on the delay correction amount of the data packet set and the delay correction amount corresponding to each of the plurality of QoS flows.

In a possible design, a data connection session for transmitting the data packet set corresponds to a plurality of QoS flows, each of the plurality of QoS flows corresponds to a different delay budget, the delay budget information of the data packet set is identification information of a target QoS flow, and the target QoS flow is one of the plurality of QoS flows. When determining the delay budget information of the data packet set based on the receiving time point of the data packet set and the user plane function network element reference receiving time point of the data packet set, the processing unit 1110 is specifically configured to: determine an available transmission delay budget of the data packet set based on the receiving time point of the data packet set, the user plane function network element reference receiving time point of the data packet set, and a delay budget of the data packet set; and determine the identification information of the target QoS flow based on the available transmission delay budget and the delay budget corresponding to each of the plurality of QoS flows.

In a possible design, the interface unit 1120 is further configured to receive a QoS parameter from a session management function network element, where the QoS parameter includes the delay correction amount corresponding to each of the plurality of QoS flows.

In a possible design, the interface unit 1120 is further configured to receive a QoS parameter from a session management function network element, where the QoS parameter includes the delay budget corresponding to each of the plurality of QoS flows.

When the communication apparatus 1100 is configured to implement the functions of the policy control function network element in the method embodiments shown in FIG. 7 to FIG. 10:
The interface unit 1120 is configured to receive a quality of service QoS requirement from an application function network element, where the QoS requirement includes a delay budget of a data packet set in a data connection session. The processing unit 1110 is configured to determine, based on the QoS requirement, a delay budget or a delay correction amount corresponding to each of a plurality of QoS flows of the data connection session, where each of the plurality of QoS flows corresponds to a different delay budget or each of the plurality of QoS flows corresponds to a different delay correction amount.

The interface unit 1120 is further configured to send QoS information to a session management function network element, where the QoS information includes the delay budget or the delay correction amount corresponding to each of the plurality of QoS flows.

In a possible design, the delay budget corresponding to each of the plurality of QoS flows is less than or equal to the delay budget of the data packet set, and the delay correction amount corresponding to each of the plurality of QoS flows is less than the delay budget of the data packet set.

When the communication apparatus 1100 is configured to implement the functions of the access network device in the method embodiments shown in FIG. 7 to FIG. 10:
In a possible implementation, the interface unit 1120 is configured to receive a data packet set from a user plane function network element, where at least one data packet in the data packet set carries delay budget information of the data packet set. The processing unit 1110 is configured to send the data packet set to a terminal device based on the delay budget information of the data packet set via the interface unit 1120.

In a possible design, the delay budget information of the data packet set is a delay correction amount of the data packet set. When sending the data packet set to the terminal device based on the delay budget information of the data packet set via the interface unit 1120, the processing unit 1110 is specifically configured to: determine an available transmission delay budget of the data packet set based on the delay correction amount and a delay budget of the data packet set; and send the data packet set to the terminal device based on the available transmission delay budget via the interface unit 1120.

In a possible design, the delay budget information of the data packet set is an available transmission delay budget of the data packet set.

In a possible design, a data connection session for transmitting the data packet set corresponds to a plurality of QoS flows, each of the plurality of QoS flows corresponds to a different delay correction amount, the delay budget information of the data packet set is identification information of a target QoS flow, and the target QoS flow is one of the plurality of QoS flows. When sending the data packet set to the terminal device based on the delay budget information of the data packet set via the interface unit 1120, the processing unit 1110 is specifically configured to: determine the available transmission delay budget of the data packet set based on a delay correction amount corresponding to the target QoS flow and the delay budget of the data packet set; and send the data packet set to the terminal device based on the available transmission delay budget via the interface unit 1120.

In a possible design, a data connection session for transmitting the data packet set corresponds to a plurality of QoS flows, each of the plurality of QoS flows corresponds to a different delay budget, the delay budget information of the data packet set is identification information of a target QoS flow, and the target QoS flow is one of the plurality of QoS flows. When sending the data packet set to the terminal device based on the delay budget information of the data packet set via the interface unit 1120, the processing unit 1110 is specifically configured to send, via the interface unit 1120, the data packet set to the terminal device based on a delay budget corresponding to the target QoS flow.

In another possible implementation, the interface unit 1120 is configured to receive a data packet set from a user plane function network element.

The processing unit 1110 is configured to: determine an available transmission delay budget of the data packet set based on a receiving time point of the data packet set, an access network device reference receiving time point of the data packet set, and a delay budget of the data packet set; and send the data packet set to a terminal device based on the available transmission delay budget via the interface unit 1120.

In a possible design, the interface unit 1120 is further configured to receive data packet set information from a session management function network element, where the data packet set information includes a data packet set transmission interval and an access network device reference receiving time point of an X^{th} data packet set in a data connection session for transmitting the data packet set, where X is a positive integer. The processing unit 1110 is further configured to determine the access network device reference receiving time point of the data packet set based on the access network device reference receiving time point of the X^{th} data packet set and the data packet set transmission interval.

In a possible design, the processing unit 1110 is further configured to determine, based on receiving time points of a plurality of consecutive data packet sets that have been received in a data connection session for transmitting the data packet set, the access network device reference receiving time point of the data packet set.

As shown in FIG. 12, this application further provides a communication apparatus 1200, including a processor 1210 and an interface circuit 1220. The processor 1210 and the interface circuit 1220 are coupled to each other. It can be understood that the interface circuit 1220 may be a transceiver, an input/output interface, an input interface, an output interface, a communication interface, or the like. Optionally, the communication apparatus 1200 may further include a memory 1230, configured to: store instructions executed by the processor 1210, or store input data required by the processor 1210 to run the instructions, or store data generated after the processor 1210 runs the instructions. Optionally, the memory 1230 may be further integrated with the processor 1210.

When the communication apparatus 1200 is configured to implement the methods shown in FIG. 3 to FIG. 10, the processor 1210 may be configured to implement a function of the processing unit 1110, and the interface circuit 1220 may be configured to implement a function of the interface unit 1120.

It should be noted that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a logical circuit, a field programmable gate array (field programmable gate array, FPGA), or another programmable logic device, a transistor logic device, a hardware component, or any combination thereof. The general-purpose processor may be a microprocessor or any regular processor or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a network device or a terminal device. Certainly, the processor and the storage medium may alternatively exist as discrete components in a network device or a terminal device.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or transmitted from one computer-readable storage medium to another computer-readable storage medium. For example, the computer program or instructions may be transmitted from one network device, terminal, computer, server, or data center to another network device, terminal, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In addition, it should be understood that the term "for example" in embodiments of this application is used to represent giving an example, an illustration, or a description. Any embodiment or design scheme described as an "example" in this application should not be explained as being more preferred or having more advantages than another embodiment or design scheme. Exactly, the term "example" is used to present a concept in a specific manner.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, comprising:
receiving, by a user plane function network element, a data packet;
obtaining, by the user plane function network element, a receiving time point of a data packet set to which the data packet belongs;
determining, by the user plane function network element, delay budget information of the data packet based on a receiving time point of the data packet and the receiving time point of the belonging data packet set; and
adding, by the user plane function network element, the delay budget information of the data packet to the data packet.

2. The method according to claim 1, wherein the delay budget information of the data packet is a delay offset of the data packet, and the delay offset of the data packet indicates a difference between the receiving time point of the data packet and the receiving time point of the belonging data packet set.

3. The method according to claim 1, wherein the delay budget information of the data packet is an available transmission delay budget of the data packet; and
the determining, by the user plane function network element, delay budget information of the data packet based on a receiving time point of the data packet and the receiving time point of the belonging data packet set comprises:
determining, by the user plane function network element, the available transmission delay budget of the data packet based on the receiving time point of the data packet, the receiving time point of the belonging data packet set, and a delay budget of the data packet set.

4. The method according to claim 1, wherein a data connection session for transmitting the data packet corresponds to a plurality of quality of service QoS flows, each of the plurality of QoS flows corresponds to a different delay offset, the delay budget information of the data packet is identification information of a target QoS flow, and the target QoS flow is one of the plurality of QoS flows; and
the determining, by the user plane function network element, delay budget information of the data packet based on a receiving time point of the data packet and the receiving time point of the belonging data packet set comprises:
determining, by the user plane function network element, a delay offset of the data packet based on the receiving time point of the data packet and the receiving time point of the belonging data packet set; and
determining, by the user plane function network element, the identification information of the target QoS flow based on the delay offset of the data packet and the delay offset corresponding to each of the plurality of QoS flows.

5. The method according to claim 1, wherein a data connection session for transmitting the data packet corresponds to a plurality of QoS flows, each of the plurality of QoS flows corresponds to a different delay budget, the delay budget information of the data packet is identification information of a target QoS flow, and the target QoS flow is one of the plurality of QoS flows; and
the determining, by the user plane function network element, delay budget information of the data packet based on a receiving time point of the data packet and the receiving time point of the belonging data packet set comprises:
determining, by the user plane function network element, an available transmission delay budget of the data packet based on the receiving time point of the data packet, the receiving time point of the belonging data packet set, and a delay budget of the data packet set; and
determining, by the user plane function network element, the identification information of the target QoS flow based on the available transmission delay budget and the delay budget corresponding to each of the plurality of QoS flows.

6. The method according to claim 4, wherein the method further comprises:
receiving, by the user plane function network element, a QoS parameter from a session management function network element, wherein the QoS parameter comprises the delay offset corresponding to each of the plurality of QoS flows.

7. The method according to claim 5, wherein the method further comprises:
receiving, by the user plane function network element, a QoS parameter from a session management function network element, wherein the QoS parameter comprises the delay budget corresponding to each of the plurality of QoS flows.

8. The method according to any one of claims 1 to 7, wherein the method comprises:
determining, by the user plane function network element, a delay correction amount of the belonging data packet set based on the receiving time point of the belonging data packet set and a user plane function network element reference receiving time point of the belonging data packet set; and
correcting, by the user plane function network element, the delay budget information of the data packet based on the delay correction amount.

9. The method according to claim 8, wherein the method further comprises:
receiving, by the user plane function network element, data packet set information from the session management function network element, wherein the data packet set information comprises a data packet set transmission interval and a user plane function network element reference receiving time point of an X^{th} data packet set in the data connection session for transmitting the data packet, wherein X is a positive integer; and
determining, by the user plane function network element, the user plane function network element reference receiving time point of the belonging data packet set based on the user plane function network element reference receiving time point of the X^{th} data packet set and the data packet set transmission interval.

10. The method according to claim 8, wherein the method further comprises:
determining, by the user plane function network element, the user plane function network element reference receiving time point of the belonging data packet set based on receiving time points of a plurality of consecutive data packet sets that have been received in the data connection session for transmitting the data packet.

11. A communication method, comprising:
receiving, by a user plane function network element, a data packet set;
determining, by the user plane function network element, delay budget information of the data packet set based on a receiving time point of the data packet set and a user plane function network element reference receiving time point of the data packet set; and
adding, by the user plane function network element, the delay budget information of the data packet set to at least one data packet in the data packet set.

12. The method according to claim 11, wherein the delay budget information of the data packet set is a delay correction amount of the data packet set, and the delay correction amount indicates a difference between the receiving time point of the data packet set and the user plane function network element reference receiving time point of the data packet set.

13. The method according to claim 11, wherein the delay budget information of the data packet set is an available transmission delay budget of the data packet set, and the determining, by the user plane function network element, delay budget information of the data packet set based on a receiving time point of the data packet set and a user plane function network element reference receiving time point of the data packet set comprises:
determining, by the user plane function network element, the available transmission delay budget of the data packet set based on the receiving time point of the data packet set, the user plane function network element reference receiving time point of the data packet set, and a delay budget of the data packet set.

14. The method according to claim 11, wherein a data connection session for transmitting the data packet set corresponds to a plurality of quality of service QoS flows, each of the plurality of QoS flows corresponds to a different delay correction amount, the delay budget information of the data packet set is identification information of a target QoS flow, and the target QoS flow is one of the plurality of QoS flows; and
the determining, by the user plane function network element, delay budget information of the data packet set based on a receiving time point of the data packet set and a user plane function network element reference receiving time point of the data packet set comprises:
determining, by the user plane function network element, a delay correction amount of the data packet set based on the receiving time point of the data packet set and the user plane function network element reference receiving time point of the data packet set; and
determining, by the user plane function network element, the identification information of the target QoS flow based on the delay correction amount of the data packet set and the delay correction amount corresponding to each of the plurality of QoS flows.

15. The method according to claim 11, wherein a data connection session for transmitting the data packet set corresponds to a plurality of QoS flows, each of the plurality of QoS flows corresponds to a different delay budget, the delay budget information of the data packet set is identification information of a target QoS flow, and the target QoS flow is one of the plurality of QoS flows; and
the determining, by the user plane function network element, delay budget information of the data packet set based on a receiving time point of the data packet set and a user plane function network element reference receiving time point of the data packet set comprises:
determining, by the user plane function network element, an available transmission delay budget of the data packet set based on the receiving time point of the data packet set, the user plane function network element reference receiving time point of the data packet set, and a delay budget of the data packet set; and
determining, by the user plane function network element, the identification information of the target QoS flow based on the available transmission delay budget and the delay budget corresponding to each of the plurality of QoS flows.

16. The method according to claim 14, wherein the method further comprises:
receiving, by the user plane function network element, a QoS parameter from a session management function network element, wherein the QoS parameter comprises the delay correction amount corresponding to each of the plurality of QoS flows.

17. The method according to claim 15, wherein the method further comprises:
receiving, by the user plane function network element, a QoS parameter from a session management function network element, wherein the QoS parameter comprises the delay budget corresponding to each of the plurality of QoS flows.

18. A communication method, comprising:
receiving, by a policy control function network element, a quality of service QoS requirement from an application function network element, wherein the QoS requirement comprises a delay budget of a data packet set in a data connection session;
determining, by the policy control function network element based on the QoS requirement, a delay parameter corresponding to each of a plurality of QoS flows of the data connection session, wherein each of the plurality of QoS flows corresponds to a different delay parameter, and the delay parameter is a delay budget, a delay offset, or a delay correction amount; and
sending, by the policy control function network element, QoS information to a session management function network element, wherein the QoS information comprises the delay parameter corresponding to each of the plurality of QoS flows.

19. The method according to claim 18, wherein the delay budget corresponding to each of the plurality of QoS flows is less than or equal to the delay budget of the data packet set, the delay offset corresponding to each of the plurality of QoS flows is less than the delay budget of the data packet set, and the delay correction amount corresponding to each of the plurality of QoS flows is less than the delay budget of the data packet set.

20. A communication method, comprising:
receiving, by an access network device, a data packet from a user plane function network element;
obtaining, by the access network device, delay budget information of the data packet or delay budget information of a data packet set to which the data packet belongs; and
sending, by the access network device, the data packet to a terminal device based on the delay budget information of the data packet or the delay budget information of the data packet set, wherein
the delay budget information of the data packet is carried in the data packet, the delay budget information of the data packet is determined based on a time point at which the user plane function network element receives the data packet and a time point at which the user plane function network element receives the data packet set, the delay budget information of the data packet set is carried in at least one data packet in the data packet set, and the delay budget information of the data packet set is determined based on the time point at which the user plane function network element receives the data packet set and a user plane function network element reference receiving time point of the data packet set.

21. The method according to claim 20, wherein the delay budget information of the data packet is a delay offset of the data packet, and the sending, by the access network device, the data packet to a terminal device based on the delay budget information of the data packet comprises:
determining, by the access network device, an available transmission delay budget of the data packet based on the delay offset and a delay budget of the data packet set; and
sending, by the access network device, the data packet to the terminal device based on the available transmission delay budget.

22. The method according to claim 20, wherein the delay budget information of the data packet is an available transmission delay budget of the data packet.

23. The method according to claim 20, wherein a data connection session for transmitting the data packet corresponds to a plurality of quality of service QoS flows, each of the plurality of QoS flows corresponds to a different delay offset, the delay budget information of the data packet is identification information of a target QoS flow, and the target QoS flow is one of the plurality of QoS flows; and
the sending, by the access network device, the data packet to a terminal device based on the delay budget information of the data packet comprises:
determining, by the access network device, an available transmission delay budget of the data packet based on a delay offset corresponding to the target QoS flow and a delay budget of the data packet set; and
sending, by the access network device, the data packet to the terminal device based on the available transmission delay budget.

24. The method according to claim 20, wherein a data connection session for transmitting the data packet corresponds to a plurality of QoS flows, each of the plurality of QoS flows corresponds to a different delay budget, the delay budget information of the data packet is identification information of a target QoS flow, and the target QoS flow is one of the plurality of QoS flows; and
the sending, by the access network device, the data packet to a terminal device based on the delay budget information of the data packet comprises:
sending, by the access network device, the data packet to the terminal device based on a delay budget corresponding to the target QoS flow.

25. The method according to claim 20, wherein the delay budget information of the data packet set is a delay correction amount of the data packet set, and the sending, by the access network device, the data packet to a terminal device based on the delay budget information of the data packet set comprises:
determining, by the access network device, an available transmission delay budget of the data packet set based on the delay correction amount and a delay budget of the data packet set; and
sending, by the access network device, the data packet to the terminal device based on the available transmission delay budget.

26. The method according to claim 20, wherein the delay budget information of the data packet set is an available transmission delay budget of the data packet set.

27. The method according to claim 20, wherein a data connection session for transmitting the data packet set corresponds to a plurality of quality of service QoS flows, each of the plurality of QoS flows corresponds to a different delay correction amount, the delay budget information of the data packet set is identification information of a target QoS flow, and the target QoS flow is one of the plurality of QoS flows; and
the sending, by the access network device, the data packet to a terminal device based on the delay budget information of the data packet set comprises:
determining, by the access network device, an available transmission delay budget of the data packet set based on a delay correction amount corresponding to the target QoS flow and a delay budget of the data packet set; and
sending, by the access network device, the data packet to the terminal device based on the available transmission delay budget.

28. The method according to claim 20, wherein a data connection session for transmitting the data packet set corresponds to a plurality of QoS flows, each of the plurality of QoS flows corresponds to a different delay budget, the delay budget information of the data packet set is identification information of a target QoS flow, and the target QoS flow is one of the plurality of QoS flows; and
the sending, by the access network device, the data packet to a terminal device based on the delay budget information of the data packet set comprises:
sending, by the access network device, the data packet to the terminal device based on a delay budget corresponding to the target QoS flow.

29. A communication method, comprising:
receiving, by an access network device, a data packet from a user plane function network element;
obtaining, by the access network device, a receiving time point of a data packet set to which the data packet belongs;
determining, by the access network device, an available transmission delay budget of the data packet based on a receiving time point of the data packet, the receiving time point of the belonging data packet set, and a delay budget of the data packet set; and
sending, by the access network device, the data packet to a terminal device based on the available transmission delay budget.

30. The method according to claim 29, wherein the method further comprises:
determining, by the access network device, a delay correction amount of the belonging data packet set based on the receiving time point of the belonging data packet set and an access network device reference receiving time point of the belonging data packet set; and
correcting, by the access network device, the available transmission delay budget of the data packet based on the delay correction amount.

31. The method according to claim 30, wherein the method further comprises:
receiving, by the access network device, data packet set information from a session management function network element, wherein the data packet set information comprises a data packet set transmission interval and an access network device reference receiving time point of an X^{th} data packet set in a data connection session for transmitting the data packet, wherein X is a positive integer; and
determining, by the access network device, the access network device reference receiving time point of the belonging data packet set based on the access network device reference receiving time point of the X^{th} data packet set and the data packet set transmission interval.

32. The method according to claim 30, wherein the method further comprises:
determining, by the access network device, the access network device reference receiving time point of the belonging data packet set based on receiving time points of a plurality of consecutive data packet sets that have been received in a data connection session for transmitting the data packet.

33. A communication method, comprising:
receiving, by a user plane function network element, a data packet;
obtaining, by the user plane function network element, a receiving time point of a data packet set to which the data packet belongs;
determining, by the user plane function network element, delay budget information of the data packet based on a receiving time point of the data packet and the receiving time point of the belonging data packet set;
adding, by the user plane function network element, the delay budget information of the data packet to the data packet;
receiving, by an access network device, the data packet from the user plane function network element; and
sending, by the access network device, the data packet to a terminal device based on the delay budget information of the data packet.

34. The method according to claim 33, wherein the delay budget information of the data packet is a delay offset of the data packet, and the delay offset of the data packet indicates a difference between the receiving time point of the data packet and the receiving time point of the belonging data packet set; and
the sending, by the access network device, the data packet to a terminal device based on the delay budget information of the data packet comprises:
determining, by the access network device, an available transmission delay budget of the data packet based on the delay offset and a delay budget of the data packet set; and
sending, by the access network device, the data packet to the terminal device based on the available transmission delay budget.

35. The method according to claim 33, wherein the delay budget information of the data packet is an available transmission delay budget of the data packet; and
the determining, by the user plane function network element, delay budget information of the data packet based on a receiving time point of the data packet and the receiving time point of the belonging data packet set comprises:
determining, by the user plane function network element, the available transmission delay budget of the data packet based on the receiving time point of the data packet, the receiving time point of the belonging data packet set, and a delay budget of the data packet set.

36. The method according to claim 33, wherein a data connection session for transmitting the data packet corresponds to a plurality of quality of service QoS flows, each of the plurality of QoS flows corresponds to a different delay offset, the delay budget information of the data packet is identification information of a target QoS flow, and the target QoS flow is one of the plurality of QoS flows; and
the determining, by the user plane function network element, delay budget information of the data packet based on a receiving time point of the data packet and the receiving time point of the belonging data packet set comprises:
determining, by the user plane function network element, a delay offset of the data packet based on the receiving time point of the data packet and the receiving time point of the belonging data packet set; and
determining, by the user plane function network element, the identification information of the target QoS flow based on the delay offset of the data packet and the delay offset corresponding to each of the plurality of QoS flows; and
the sending, by the access network device, the data packet to a terminal device based on the delay budget information of the data packet comprises:
determining, by the access network device, an available transmission delay budget of the data packet based on a delay offset corresponding to the target QoS flow and a delay budget of the data packet set; and
sending, by the access network device, the data packet to the terminal device based on the available transmission delay budget.

37. The method according to claim 33, wherein a data connection session for transmitting the data packet corresponds to a plurality of QoS flows, each of the plurality of QoS flows corresponds to a different delay budget, the delay budget information of the data packet is identification information of a target QoS flow, and the target QoS flow is one of the plurality of QoS flows; and
the determining, by the user plane function network element, delay budget information of the data packet based on a receiving time point of the data packet and the receiving time point of the belonging data packet set comprises:
determining, by the user plane function network element, an available transmission delay budget of the data packet based on the receiving time point of the data packet, the receiving time point of the belonging data packet set, and a delay budget of the data packet set; and
determining, by the user plane function network element, the identification information of the target QoS flow based on the available transmission delay budget and the delay budget corresponding to each of the plurality of QoS flows; and
the sending, by the access network device, the data packet to a terminal device based on the delay budget information of the data packet comprises:
sending, by the access network device, the data packet to the terminal device based on a delay budget corresponding to the target QoS flow.

38. The method according to claim 36, wherein the method further comprises:
receiving, by a policy control function network element, a QoS requirement from an application function network element, wherein the QoS requirement comprises the delay budget of the data packet set in the data connection session;
determining, by the policy control function network element based on the QoS requirement, the delay offset corresponding to each of the plurality of QoS flows of the data connection session, wherein each of the plurality of QoS flows corresponds to a different delay offset;
sending, by the policy control function network element, QoS information to a session management function network element, wherein the QoS information comprises the delay offset corresponding to each of the plurality of QoS flows; and
receiving, by the user plane function network element, a QoS parameter from the session management function network element, wherein the QoS parameter comprises the delay offset corresponding to each of the plurality of QoS flows.

39. The method according to claim 38, wherein the delay offset corresponding to each of the plurality of QoS flows is less than the delay budget of the data packet set.

40. The method according to claim 37, wherein the method further comprises:
receiving, by a policy control function network element, a QoS requirement from an application function network element, wherein the QoS requirement comprises the delay budget of the data packet set in the data connection session;
determining, by the policy control function network element based on the QoS requirement, the delay budget corresponding to each of the plurality of QoS flows of the data connection session, wherein each of the plurality of QoS flows corresponds to a different delay budget;
sending, by the policy control function network element, QoS information to a session management function network element, wherein the QoS information comprises the delay budget corresponding to each of the plurality of QoS flows; and
receiving, by the user plane function network element, a QoS parameter from the session management function network element, wherein the QoS parameter comprises the delay budget corresponding to each of the plurality of QoS flows.

41. The method according to claim 40, wherein the delay budget corresponding to each of the plurality of QoS flows is less than or equal to the delay budget of the data packet set.

42. The method according to any one of claims 33 to 41, wherein the method comprises:
determining, by the user plane function network element, a delay correction amount of the belonging data packet set based on the receiving time point of the belonging data packet set and a user plane function network element reference receiving time point of the belonging data packet set; and
correcting, by the user plane function network element, the delay budget information of the data packet based on the delay correction amount.

43. The method according to claim 42, wherein the method further comprises:
receiving, by the user plane function network element, data packet set information from the session management function network element, wherein the data packet set information comprises a data packet set transmission interval and a user plane function network element reference receiving time point of an X^{th} data packet set in the data connection session for transmitting the data packet, wherein X is a positive integer; and
determining, by the user plane function network element, the user plane function network element reference receiving time point of the belonging data packet set based on the user plane function network element reference receiving time point of the X^{th} data packet set and the data packet set transmission interval.

44. The method according to claim 42, wherein the method further comprises:
determining, by the user plane function network element, the user plane function network element reference receiving time point of the belonging data packet set based on receiving time points of a plurality of consecutive data packet sets that have been received in the data connection session for transmitting the data packet.

45. A communication method, comprising:
receiving, by a user plane function network element, a data packet set;
determining, by the user plane function network element, delay budget information of the data packet set based on a receiving time point of the data packet set and a user plane function network element reference receiving time point of the data packet set;
adding, by the user plane function network element, the delay budget information of the data packet set to at least one data packet in the data packet set;
receiving, by an access network device, a data packet from the user plane function network element, wherein the data packet belongs to the data packet set;
obtaining, by the access network device, the delay budget information of the data packet set to which the data packet belongs; and
sending, by the access network device, the data packet to a terminal device based on the delay budget information of the data packet set.

46. The method according to claim 45, wherein the delay budget information of the data packet set is a delay correction amount of the data packet set, and the delay correction amount indicates a difference between the receiving time point of the data packet set and the user plane function network element reference receiving time point of the data packet set; and
the sending, by the access network device, the data packet to a terminal device based on the delay budget information of the data packet set comprises:
determining, by the access network device, an available transmission delay budget of the data packet set based on the delay correction amount and a delay budget of the data packet set; and
sending, by the access network device, the data packet to the terminal device based on the available transmission delay budget.

47. The method according to claim 45, wherein the delay budget information of the data packet set is an available transmission delay budget of the data packet set, and the determining, by the user plane function network element, delay budget information of the data packet set based on a receiving time point of the data packet set and a user plane function network element reference receiving time point of the data packet set comprises:
determining, by the user plane function network element, the available transmission delay budget of the data packet set based on the receiving time point of the data packet set, the user plane function network element reference receiving time point of the data packet set, and a delay budget of the data packet set.

48. The method according to claim 45, wherein a data connection session for transmitting the data packet set corresponds to a plurality of quality of service QoS flows, each of the plurality of QoS flows corresponds to a different delay correction amount, the delay budget information of the data packet set is identification information of a target QoS flow, and the target QoS flow is one of the plurality of QoS flows;
the determining, by the user plane function network element, delay budget information of the data packet set based on a receiving time point of the data packet set and a user plane function network element reference receiving time point of the data packet set comprises:
determining, by the user plane function network element, a delay correction amount of the data packet set based on the receiving time point of the data packet set and the user plane function network element reference receiving time point of the data packet set; and
determining, by the user plane function network element, the identification information of the target QoS flow based on the delay correction amount of the data packet set and the delay correction amount corresponding to each of the plurality of QoS flows; and
the sending, by the access network device, the data packet to a terminal device based on the delay budget information of the data packet set comprises:
determining, by the access network device, an available transmission delay budget of the data packet set based on a delay correction amount corresponding to the target QoS flow and a delay budget of the data packet set; and
sending, by the access network device, the data packet to the terminal device based on the available transmission delay budget.

49. The method according to claim 45, wherein a data connection session for transmitting the data packet set corresponds to a plurality of QoS flows, each of the plurality of QoS flows corresponds to a different delay budget, the delay budget information of the data packet set is identification information of a target QoS flow, and the target QoS flow is one of the plurality of QoS flows;
the determining, by the user plane function network element, delay budget information of the data packet set based on a receiving time point of the data packet set and a user plane function network element reference receiving time point of the data packet set comprises:
determining, by the user plane function network element, an available transmission delay budget of the data packet set based on the receiving time point of the data packet set, the user plane function network element reference receiving time point of the data packet set, and a delay budget of the data packet set; and
determining, by the user plane function network element, the identification information of the target QoS flow based on the available transmission delay budget and the delay budget corresponding to each of the plurality of QoS flows; and
the sending, by the access network device, the data packet to a terminal device based on the delay budget information of the data packet set comprises:
sending, by the access network device, the data packet to the terminal device based on a delay budget corresponding to the target QoS flow.

50. The method according to claim 48, wherein the method further comprises:
receiving, by a policy control function network element, a QoS requirement from an application function network element, wherein the QoS requirement comprises the delay budget of the data packet set in the data connection session;
determining, by the policy control function network element based on the QoS requirement, the delay correction amount corresponding to each of the plurality of QoS flows of the data connection session, wherein each of the plurality of QoS flows corresponds to a different delay correction amount;
sending, by the policy control function network element, QoS information to a session management function network element, wherein the QoS information comprises the delay correction amount corresponding to each of the plurality of QoS; and
receiving, by the user plane function network element, a QoS parameter from the session management function network element, wherein the QoS parameter comprises the delay correction amount corresponding to each of the plurality of QoS flows.

51. The method according to claim 50, wherein the delay correction amount corresponding to each of the plurality of QoS flows is less than the delay budget of the data packet set.

52. The method according to claim 49, wherein the method further comprises:
receiving, by a policy control function network element, a QoS requirement from an application function network element, wherein the QoS requirement comprises the delay budget of the data packet set in the data connection session;
determining, by the policy control function network element based on the QoS requirement, the delay budget corresponding to each of the plurality of QoS flows of the data connection session, wherein each of the plurality of QoS flows corresponds to a different delay budget;
sending, by the policy control function network element, QoS information to a session management function network element, wherein the QoS information comprises the delay budget corresponding to each of the plurality of QoS flows; and
receiving, by the user plane function network element, a QoS parameter from the session management function network element, wherein the QoS parameter comprises the delay budget corresponding to each of the plurality of QoS flows.

53. The method according to claim 52, wherein the delay budget corresponding to each of the plurality of QoS flows is less than or equal to the delay budget of the data packet set.

54. A communication apparatus, comprising an interface unit and a processing unit, wherein
the interface unit is configured to receive and send data; and
the processing unit is configured to perform, via the interface unit, the method according to any one of claims 1 to 17.

55. A communication apparatus, comprising an interface unit and a processing unit, wherein
the interface unit is configured to receive and send data; and
the processing unit is configured to perform, via the interface unit, the method according to claim 18 or 19.

56. A communication apparatus, comprising an interface unit and a processing unit, wherein
the interface unit is configured to receive and send data; and
the processing unit is configured to perform, via the interface unit, the method according to any one of claims 20 to 32.

57. A communication apparatus, comprising a processor and a memory, wherein the memory is coupled to the processor, the memory is configured to store program instructions, and the processor is configured to execute the program instructions to implement the method according to any one of claims 1 to 17.

58. A communication apparatus, comprising a processor and a memory, wherein the memory is coupled to the processor, the memory is configured to store program instructions, and the processor is configured to execute the program instructions to implement the method according to claim 18 or 19.

59. A communication apparatus, comprising a processor and a memory, wherein the memory is coupled to the processor, the memory is configured to store program instructions, and the processor is configured to execute the program instructions to implement the method according to any one of claims 20 to 32.

60. A chip, wherein the chip is configured to implement the method according to any one of claims 1 to 32.

61. A computer-readable storage medium, wherein the storage medium stores a computer program or instructions; and when the computer program or the instructions are executed, the method according to any one of claims 1 to 32 is implemented.

62. A computer program product, wherein the computer program product comprises a computer program or instructions; and when the computer program or the instructions are executed, the method according to any one of claims 1 to 32 is implemented.

63. A communication system, comprising a user plane network element and an access network device, wherein
the user plane function network element is configured to perform the method according to any one of claims 1 to 17; and
the access network device is configured to implement the method according to any one of claims 20 to 28.

64. The communication system according to claim 63, wherein the communication system further comprises a policy control function network element; and
the policy control function network element is configured to perform the method according to claim 18 or 19.
